# EUROPÄISCHE PATENTSCHRIFT

(11) **EP 3 487 956 B1**
(45) Veröffentlichungstag und Bekanntmachung des Hinweises auf die Patenterteilung: **14.01.2026**
(21) Anmeldenummer: 17740722.8
(22) Anmeldetag: 12.07.2017
(51) Int. Cl.: C08K 3/32, C08K 3/38, C08K 5/00, C08K 5/52, C08K 7/14, C09K 21/02, C09K 21/12

(54) **FLAMMSCHUTZMITTELMISCHUNGEN, IHRE HERSTELLUNG UND IHRE VERWENDUNG**
FLAME PROTECTION AGENT MIXTURES, THEIR PREPARATION AND THEIR USE
MÉLANGES IGNIFUGES, LEUR PRÉPARATION ET LEUR UTILISATION

(30) Priorität: 20.07.2016 DE 102016213281
(43) Veröffentlichungstag der Anmeldung: 29.05.2019
(73) Patentinhaber: Clariant International Ltd, 4132 Muttenz (CH)
(72) Erfinder: BAUER, Harald, 50170 Kerpen (DE); HÖROLD, Sebastian, 86420 Diedorf (DE); SICKEN, Martin, 51149 Köln (DE)
(74) Vertreter: Clariant Produkte (Deutschland) GmbH
(86) Internationale Anmeldenummer: PCT/EP2017/067610
(87) Internationale Veröffentlichungsnummer: WO 2018/015252

(56) Entgegenhaltungen:
- EP-A1- 3 091 023
- WO-A1-2011/051121
- WO-A1-2014/209590
- WO-A1-2015/101136
- WO-A1-2016/150846
- CN-A- 102 092 754
- DE-A1- 102010 018 684
- DE-A1- 102014 001 222
- US-A1- 2015 183 991
- CHEN JIA ET AL: "Synthesis of Novel Alkyl Phosphinate Double Salt and Its Application in Epoxy Resin", 1 October 2014 (2014-10-01), pages 10 - 14, XP093207401, Retrieved from the Internet <URL:https://qks.jhun.edu.cn/jhdx_zk/EN/abstract/abstract1126.shtml> [retrieved on 20240924]
- E. GALLO ET AL: "Flame retardant biocomposites: Synergism between phosphinate and nanometric metal oxides", EUROPEAN POLYMER JOURNAL., vol. 47, no. 7, 16 April 2011 (2011-04-16), GB, pages 1390 - 1401, XP055414478, ISSN: 0014-3057, DOI: 10.1016/j.eurpolymj.2011.04.001

## Beschreibung

Nach dem Stand der Technik werden Dialkylphosphinsäuresalze (auch als Dialkylphosphinate bezeichnet) in Flammschutzmittelmischungen in Form ihrer Mg-, Ca-, Al-, Sb-, Sn-, Ge-, Ti-, Fe-, Zr-, Zn-, Ce-, Bi-, Sr-, Mn-, Li-, Na- und K-Salze eingesetzt.

WO 2015101136 offenbart ein Additiv für ein Polymer, und insbesondere ein Dialkylphosphinat, das eine Spurenmenge Chlor enthält, sowie ein Verfahren zu dessen Herstellung.

WO 2011051121 offenbart thermoplastische Formmassen enthaltendA) 10 bis 98 Gew.-% eines PolyamidsB) 0,001 bis 20 Gew.-% Eisenpulver mit einer Partikelgröße von höchstens 10 µm (d50-Wert)C) 1 bis 40 Gew.-% eines halogenfreien Flammschutzmittels aus der Gruppe der phosphorhaltigen oder stickstoffhaltigen Verbindungen oder P-N-Kondensate oder Mischungen davon undD) 0 bis 70 Gew.-% weiterer Additive, wobei die Summe der Gewichtsprozente der Komponenten A) bis D) 100% ergibt.

US 2015183991 offenbart eine flammgeschützte thermoplastische Harzzusammensetzung, die (A) ein thermoplastisches Harz, das kein Polyphenylenether ist, (B) Polyphenylenether, (C) mindestens ein Phosphinat, ausgewählt aus der Gruppe bestehend aus einem Phosphinat mit einer bestimmten Struktur, einem Diphosphinat mit einer bestimmten Struktur und einem Kondensat davon, und (D) mindestens ein Farbmittel, ausgewählt aus der Gruppe bestehend aus einem organischen Pigment, einem anorganischen Pigment und einem organischen Farbstoff, enthält, wobei ein Gehalt an Eisenelement weniger als 50 ppm auf Massenbasis beträgt.

E. Gallo *et al.* beschreiben neue biologisch abbaubare Nanokomposite mit verbesserter Flammhemmung und angemessenen thermomechanischen Eigenschaften, basierend auf einer kommerziellen PHBV/PBAT-Mischung. Die in Bezug auf die Entflammbarkeit erzielten Nanokomposite unterstreichen die relevanten Potenziale dieser Materialien, insbesondere in Bereichen, in denen Biologische Abbaubarkeit und Brandsicherheit gleichzeitig erforderlich sind (flammhemmende Biokomposite: Synergismus zwischen Phosphinat und nanometrischen Metalloxiden" (EUROPEAN POLYMER JOURNAL, Bd. 47, Nr. 7, 16. April 2011 (2011-04-16), Seiten 1390-1401, XP055414478.

WO2016150846 beschreibt Flammschutzmittelgemische, die besonders wenig nachteilige Wechselwirkungen mit dem jeweiligen Polymer während der Verarbeitung zu flammgeschützten Polymerformmassen zeigen. DE102014001222 beschreibt halogenfreie Flammschutzmittelgemische, umfassend 1 bis 99 Gew.-% einer Komponente A und 1 bis 99 Gew.-% einer Komponente B, wobei die Komponente A aus 85 bis 99,995 Gew.-% eines festen Diethylphosphinsäuresalzes der Metalle Mg, Ca, Al, Sb, Sn, Ge, Ti, Fe, Zr, Zn, Ce, Bi, Sr, Mn, Li, Na, K und/oder einer protonierten Stickstoffbase und 0,005 bis 15 Gew.-% nicht brennbaren Additiven besteht und die Komponente B Aluminiumphosphit ist.

Die Flammschutzmittelmischungen nach dem Stand der Technik besitzen eine begrenzte thermische Beständigkeit. Dies wirkt sich in einem beschränkten Temperaturbereich aus, in dem die Ausgangsstoffe aus Polymer, Flammschutzmittel, Glasfasern und weitere Additive zu flammgeschützten Polymerformmassen compoundiert werden können. Man spricht von einem Verarbeitungsfenster, das von einer unteren und einer oberen Temperaturgrenze begrenzt ist.

Die untere Temperaturgrenze ergibt sich indem erst ab einer bestimmten Temperatur die Zähigkeit des Polymers niedrig genug ist, dass es in den Maschinen transportierbar und mischbar ist.

Die obere Temperatur äußert sich indirekt in einer Zersetzung der Inhaltsstoffe und dem späteren Ausblühen von Zersetzungsprodukten wenn die flammgeschützten Polymerformmassen und Polymerformformkörper unter feuchten Bedingungen gelagert werden. Zersetzt sich das Polymer, können auch die mechanischen Festigkeitseigenschaften der flammgeschützten Polymerformkörper (E-Modul, Biegefestigkeit, Reißdehnung) verringert werden.

Der vorliegenden Erfindung liegt daher die Aufgabe zugrunde, eine thermisch beständigere Flammschutzmittelmischung mit einem weiten Verarbeitungsfenster zur Verfügung zu stellen.

Die Aufgabe wird gelöst durch Zusatz von Eisen zu den Salzen von Diorganylphosphinsäuren und insbesondere von Dialkylphosphinsäuren.

Überraschenderweise wurde gefunden, dass die erfindungsgemäßen Flammschutzmittelmischungen ein verbreitertes Verarbeitungsfenster bei der Compoundierung von flammgeschützten Polymerformmassen bzw. beim Spritzgießen von flammgeschützten Polymerformkörpern besitzen und gleichzeitig eine gute Flammschutzwirkung zeigen.

Die Erfindung betrifft daher eine Flammschutzmittelmischung, enthaltend als Komponente A) 60 bis 99,8999 Gew.-% Diorganylphosphinsäuresalze, 0,0001 bis 20 Gew.-% Komponente B1) ausgewählt aus der Gruppe bestehend aus Eisen(II)dialkylphosphinat, Eisen(III)dialkylphosphinat, Eisen(II)monoalkyl-phosphinat, Eisen(III)monoalkylphosphinat, Eisen(II)alkylphosphonat, Eisen(III)alkylphosphonat, Eisen(II)phosphit, Eisen(III)phosphit, Eisen(II)phosphat und Eisen(III)phosphat, und
0,1 bis 40 Gew.-% an Telomeren als weitere Komponente C), wobei es sich bei den Telomeren um Verbindungen der Formel (III) handelt

H-(C_{w}H_{2w})ₖ P(O)(OM) (CₓH₂ₓ)ₗ-H (III)

wobei in Formel (III), unabhängig voneinander,

| | | |
|---|---|---|
| k | 1 bis 9, l | 1 bis 9, |
| w | 2 bis 9, x | 2 bis 9, |

bedeuten und
M Mg, Ca, Al, Sb, Sn, Ge, Ti, Fe, Zr, Zn, Ce, Bi, Sr, Mn, Li, Na, K und/oder
eine protonierte Stickstoffbase bedeutet, und die Gruppen C_{w}H_{2w})ₖ, (CₓH₂ₓ)ₗ geradlinig oder verzweigt sein können; und/oder
wobei es sich bei den Telomeren um Verbindungen der Formel (I) handelt 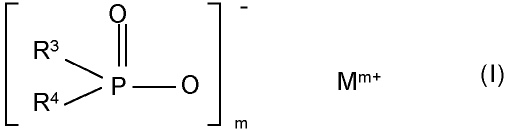
worin
R³, R⁴ gleich oder verschieden sind und C₆-C₁₀-Aryl, C₇-C₂₀-Alkylaryl, C₇-C₂₀-Arylalkyl und/oder C₃-C₁₆-Cycloalkyl oder -Bicycloalkyl,
M Mg, Ca, Al, Sb, Sn, Ge, Ti, Fe, Zr, Zn, Ce, Bi, Sr, Mn, Li, Na, K und/oder eine protonierte Stickstoffbase bedeutet;
und es sich bei den Komponenten A), B1) und C) um unterschiedliche Verbindungen handelt, wobei die Summe der Komponenten A), B1) und C) 100 Gew.-% ergibt
mit der Maßgabe, dass es sich bei den Komponenten A), B1) und C) jeweils um unterschiedliche Verbindungen handelt, dass Komponenten A), B1) und C) miteinander cogefällt sind oder dass Komponenten A) und C) in Form einer einheitlichen ionischen Verbindung vorliegen und Komponente B1) cogefällt wurde oder dass Komponenten A) und B1) miteinander cogefällt wurden und Komponente C) physikalisch zugemischt wurde.

In der erfindungsgemäßen Flammschutzmittelmischung liegt die Komponente B1) als Eisen(II)dialkylphosphinate, Eisen(III)dialkylphosphinate, Eisen(II)monoalkylphosphinate, Eisen(III)monoalkylphosphinate, Eisen(II)alkylphosphonate, Eisen(III)alkylphosphonate, Eisen(II)phosphit, Eisen(III)phosphit, Eisen(II)phosphat und/oder Eisen(III)phosphat vor.

Besonders bevorzugt liegt in der erfindungsgemäßen Flammschutzmittelmischung die Komponente B1) als Eisen(II)bis- und/oder Eisen(III)tris(diethylphosphinat), -(dipropylphosphinat), -(butylethyl-phosphinat), -(n-butylethylphosphinat), -(sec-butylethylphosphinat), -(hexylethyl-phosphinat), -(dibutylphosphinat), -(hexylbutylphosphinat), -(octylethylphosphinat), -(ethyl(cyclopentylethyl)phosphinat), -(butyl(cyclopentylethyl)phosphinat), -(ethyl(cyclohexylethyl)phosphinat),-(butyl(cyclohexylethyl)phosphinat, -(ethyl(phenylethyl)phosphinat), -(butyl(phenylethyl)phosphinat), -(ethyl(4-methylphenylethyl)phosphinat), -(butyl(4-methylphenylethyl)phosphinat), -(butylcyclopentylphosphinat), -(butylphenylphosphinat), -(ethyl(4-methylphenyl)phosphinat) und/oder -(butyl(4-methylphenyl)phosphinat; um Eisen(II)mono- und/oder Eisen(III)mono(ethylphosphinat), -(propylphosphinat), -(butylphosphinat), -(n-butylphosphinat), -(sec-butylphosphinat), -(hexylphosphinat) und/oder -(octylphosphinat); um Eisen(II)- und/oder Eisen(III)-(ethylphosphonat), -(propylphosphonat), -(butylphosphonat), -(n-butylphosphonat), -(sec-butylphosphonat), -(hexylphosphonat) und/oder -(octylphosphonat) vor.

Besonders bevorzugt sind die Komponenten A) und B1) miteinander cogefällt.

Die Komponenten A), B1) und C) sind miteinander cogefällt.

Die Komponenten A) und C) liegen in Form einer einheitlichen ionischen Verbindung vor und die Komponente B1) wurde cogefällt.

Die Komponenten A) und B1) sind miteinander cogefällt und die Komponente C) wurde physikalisch zugemischt.

Bei der Komponente C) handelt es sich um Telomere der Summenformel (III)

H-(C_{w}H_{2w})ₖ P(O)(OM) (CₓH₂ₓ)ₗ-H (III)

wobei in Formel (III), unabhängig voneinander,

| | | |
|---|---|---|
| k | 1 bis 9, l | 1 bis 9, |
| w | 2 bis 9, x | 2 bis 9, |

bedeuten und
M Mg, Ca, Al, Sb, Sn, Ge, Ti, Fe, Zr, Zn, Ce, Bi, Sr, Mn, Li, Na, K und/oder eine protonierte Stickstoffbase bedeutet,
und die Gruppen (C_{w}H_{2w})ₖ, (CₓH₂ₓ)ₗ geradlinig oder verzweigt sein können;
und/oder es handelt sich bei den Telomeren um solche der Formel (I) 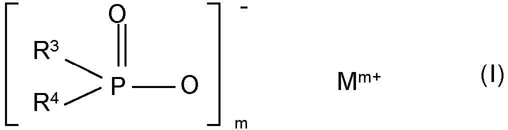 worin
   - R³ und R⁴: gleich oder verschieden sind und C₆-C₁₀-Arylen, C₇-C₂₀-Alkylarylen, C₇-C₂₀-Arylalkylen und/oder C₃-C₁₆-Cycloalkyl oder -Bicycloalkyl,
   - M: Mg, Ca, Al, Sb, Sn, Ge, Ti, Fe, Zr, Zn, Ce, Bi, Sr, Mn, Li, Na, K und/oder eine protonierte Stickstoffbase bedeutet
und wobei es sich bei den Komponenten A) und C) um unterschiedliche Verbindungen handelt.

Besonders bevorzugt bedeutet in Formel (III) w und x jeweils 2 oder 3 und k und l jeweils 1 bis 3 und M Al, Ti, Fe oder Zn.

Bevorzugt handelt es sich bei den Telomeren um Metallsalze der Ethylbutylphosphinsäure, Dibutylphosphinsäure, Ethylhexylphosphinsäure, Butylhexylphosphinsäure, Ethyloctylphosphinsäure, sec-Butylethylphosphinsäure, 1-Ethylbutyl-Butyl-phosphinsäure, Ethyl-1-Methylpentyl-phosphinsäure, Di-sec-Butylphosphinsäure (Di-1-Methyl-propylphosphinsäure), Propyl-Hexylphosphinsäure, Dihexylphosphinsäure, Hexyl-Nonylphosphinsäure, Propyl-Nonylphosphinsäure, Dinonylphosphinsäure, Dipropylphosphinsäure, Butyl-Octylphosphinsäure, Hexyl-Octylphosphinsäure, Dioctylphosphinsäure, Ethyl(cyclopentylethyl)phosphinsäure, Butyl(cyclopentylethyl)phosphinsäure, Ethyl(cyclohexylethyl)phosphinsäure, Butyl(cyclohexylethyl)phosphinsäure, Ethyl(phenylethyl)phosphinsäure, Butyl(phenylethyl)phosphinsäure, Ethyl(4-methylphenylethyl)phosphinsäure, Butyl(4-methylphenylethyl)phosphinsäure, Butylcyclopentylphosphininsäure, Butylcyclohexylethylphosphinsäure, Butylphenylphosphinsäure, Ethyl(4-methylphenyl)phosphinsäure und/oder Butyl(4-methylphenyl)phosphinsäure, wobei das Metall des Metallsalzes aus der Gruppe Mg, Ca, Al, Sb, Sn, Ge, Ti, Fe, Zr, Zn, Ce, Bi, Sr, Mn, Li, Na und/oder K entstammt.

Bevorzugt enthalten die erfindungsgemäßen Flammschutzmittelmischungen weiterhin als Komponente D) Synergisten, wobei es sich bei den Synergisten um Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphate, Melampolyphosphate, Melempolyphosphate und/oder Melonpolyphosphate; um Melaminkondensationsprodukte wie Melam, Melem und/oder Melon; um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Harnstoffcyanurat, Dicyandiamid und/oder Guanidin; um stickstoffhaltige Phosphate der Formeln (NH₄)_{y}H_{3-y}PO₄ bzw. (NH₄PO₃)_{z}, mit y gleich 1 bis 3 und z gleich 1 bis 10.000; um Aluminiumphosphite; Aluminiumpyrophosphite, Aluminiumphosphonate, Aluminiumpyrophosphonate, um Silicate, Zeolite, Kieselsäuren, Keramikpulver, Zinkverbindungen, z. B. Zinkborat, Zinkcarbonat, Zinkstannat, Zinkhydroxystannat, Zinkphosphat, Zinksulfid, Zinkoxid, Zinkhydroxid, Zinnoxidhydrat, basisches Zink-Silikat, Zinkmolybdat Magnesiumhydroxid, Hydrotalcit, Magnesiumcarbonat und/oder Calciummagnesiumcarbonat handelt.

Bevorzugt weisen die Flammschutzmittelmischungen
eine Teilchengröße von 0,01 bis 1000 µm,
eine Schüttdichte von 50 bis 1500 g/l,
eine Stampfdichte von 100 g/l bis 1100 g/l,
einen Schüttwinkel von 5 bis 45 Grad,
eine BET-Oberfläche von 1 bis 40 m²/g,
L-Farbwerte von 85 bis 99,9,
a-Farbwerte von -4 bis +9,
b-Farbwerte von -2 bis +6 auf.

Besonders bevorzugt weisen die Flammschutzmittelmischungen
eine Teilchengröße von 0,5 bis 800 µm,
eine Schüttdichte von 80 bis 800 g/l,
eine Stampfdichte von 600 g/L bis 800 g/l,
einen Schüttwinkel von 10 bis 40 Grad auf.

Die Erfindung betrifft auch die Verwendung von Flammschutzmittelmischungen nach einem oder mehreren der Ansprüche 1 bis 19 als Zwischenprodukt für weitere Synthesen, als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen.

Die Erfindung umfasst auch flammgeschützte thermoplastische oder duroplastische Polymerformmassen, Polymer-Formkörper, -Filme, -Fäden und -Fasern enthaltend 0,5 bis 45 Gew.-% Flammschutzmittelmischungen nach einem oder mehreren der Ansprüche 1 bis 19, 0,5 bis 95 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Bei den thermoplastischen Polymeren handelt es sich dabei um solche der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe und bei den duroplastischen Polymeren um solche der Art Formaldehyd-, Epoxid-, Melamin-Phenolharz-Polymere, ungesättigte Polyester, Epoxidharze und/oder Polyurethane.

Bevorzugt enthalten die thermoplastischen oder duroplastischen Polymerformmassen, Polymer-Formkörper, -Filme, -Fäden und -Fasern weitere Additive, wobei es sich dabei um Antioxidantien, UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren, Farbstoffe, Pigmente und andere handelt.

Bevorzugte Diorganylphosphinsäuresalze sind die Dialkylphosphinsäuresalze, die dann ebenfalls der Formel (II) entsprechen.

Bevorzugte Dialkylphosphinsäuresalze sind insbesondere solche der Formel (II) in denen R¹ und R² gleich oder verschieden sind und C₁-C₁₈-Alkyl linear, verzweigt oder cyclisch bedeuten.

Bevorzugt sind Diethylphosphinsäuresalze, in denen das Kation zur Salzbildung Mg, Ca, Al, Sb, Sn, Ge, Ti, Zr, Zn, Ce, Bi, Sr, Mn, Li, Na oder K ist und davon sind wiederum Al, Ti und Zn besonders bevorzugt.

Telomere entstehen bei der Anlagerung des Olefins an das Hypophosphition. Es werden nicht nur zwei Moleküle Olefin zum Dialkylphosphination angelagert, sondern mehrere. Eine oder beide Alkylketten werden so um eine oder mehrere weitere Olefineinheiten verlängert.

In der weiter vorn genannten Formel (III) bedeutet -(CwH₂w)k eine Summenformel und keine Strukturformel, d.h. dass hier nicht notwendigerweise CH₂-Einheiten linear verknüpft sind.

Bevorzugte Telomere sind solche der Formel (V)

H-(C_{w}H_{2w})ₖ P(O)(OMe) (CₓH₂ₓ)ₗ-H (V)

wobei in Formel (V), unabhängig voneinander,
k 1 bis 9, l 1 bis 9, w 2 bis 9 und x 2 bis 9 und Me Mg, Ca, Al, Sb, Sn, Ge, Ti, Fe, Zr, Zn, Ce, Bi, Sr, Mn, Li, Na und/oder K bedeuten.

Bevorzugt liegen die Telomere als Al-, Ti-, Fe- und/oder Zn-Salz vor.

Bevorzugt bedeuten in Formel (VI) w und x auch jeweils 2 bis 4 und k und l jeweils 1 bis 4.

Bei Verwendung von Ethylen als Olefin bei der Herstellung der erfindungsgemäßen Dialkylphosphinsäuresalze entstehen bevorzugt Telomere des Typs Ethylbutylphosphinsäure, Dibutylphosphinsäure, Ethylhexylphosphinsäure, Butylhexylphosphinsäure, Ethyloctylphosphinat usw. und/oder deren Salze.

Bei Propen ist die Abfolge sinngemäß.

Bevorzugte Olefine sind Ethen, Propen, 1-Buten, 2-Buten, 1-Penten, 1-Hexen und 1-Octen.

Die Stereochemie erlaubt auch die Bildung von verzweigten Alkylketten, z. B. sec-Butylethylphosphinat, 1-Ethylbutyl-Butyl-phosphinat, Ethyl-1-Methylpentyl-phosphinat, Di-sec-Butylphosphinat (Di-1-Methyl-propylphosphinat) usw.

Telomere selbst sind phosphorhaltige Verbindungen. Ihr Gehalt wird in Prozent aller Phosphor enhaltenden Inhaltsstoffe angegeben (P-%). Er wird mittels ³¹P-NMR bestimmt.

Das Eisen kann weiterhin bevorzugt als nicht ionisch eingebautes Eisensalz vorliegen. Das Eisensalz kann dabei als eine eigene chemische Spezies vorliegen. Durch die Cofällung ist es gleichmäßig auf das Dialkylphosphinsäuresalz oder auf einer Dialkylphosphinsäuresalz-Telomersalz-Mischung verteilt.

Dabei bilden sich durch unterschiedliche Löslichkeit bedingt unterschiedliche Kristalle, die aber fein miteinander verteilt bzw. verwachsen sind.

Für die Stabilität der Flammschutzmittelmischung gegen Entmischung beim Rütteln ist die Cofällung des Eisens vorteilhaft.

Bevorzugt handelt es sich bei den Eisensalzen für die Cofällung um lösliche Verbindungen.

Bevorzugt handelt es sich bei den löslichen Verbindungen (Eisensalzen) für die Cofällung um Eisen (II) und/oder Eisen(III)salze.

Bevorzugt handelt es sich bei den Eisensalzen für die Cofällung um Eisen(II)salze und/oder Eisen(III)salze mit anorganischen Anionen der siebten Hauptgruppe (Halogenide) wie z. B. Fluoride, Chloride, Bromide, Iodide; mit Anionen der Oxosäuren der siebten Hauptgruppe (Hypohalogenite, Halogenite, Halogenate, z. B. Iodat, Perhalogenate, z. B. Perchlorat); mit Anionen der sechsten Hauptgruppe (Chalgogenide) wie z. B. Oxide, Hydroxide, Peroxide, Superoxide; mit Anionen der Oxosäuren der sechsten Hauptgruppe (Sulfate, Hydrogensulfate, Sulfathydrate, Sulfite, Peroxosulfate); mit Anionen der fünften Hauptgruppe (Pnicogenide) wie z. B. Nitride, Phosphide; mit Anionen der Oxosäuren der fünften Hauptgruppe (Nitrat, Nitrathydrate, Nitrite, Phosphate, Peroxophosphate, Phosphite, Hypophosphite, Pyrophosphate); mit Anionen der Oxosäuren der vierten Hauptgruppe (Carbonate, Hydrogencarbonate, Hydroxidcarbonate, Carbonathydrate, Silicate, Hexafluorosilicate, Hexafluorosilicathydrate, Stannate); mit Anionen der Oxosäuren der dritten Hauptgruppe (Borate, Polyborate, Peroxoborate); mit Anionen der Pseudohalogenide (Thiocyanate, Cyanate, Cyanide); mit Anionen der Oxosäuren der Übergangsmetalle (Chromate, Chromite, Molybdate, Permanganat).

Bevorzugt handelt es sich bei den Eisensalzen für die Cofällung um Eisen(II)salze und/oder Eisen(III)salze mit organischen Anionen aus der Gruppe der Mono-, Di-, Oligo-, Polycarbonsäuren (Salze der Ameisensäure (Formiate)), der Essigsäure (Acetate, Acetathydrate), der Trifluoressigsäure (Trifluoracetathydrate), Propionate, Butyrate, Valerate, Caprylate, Oleate, Stearate, der Oxalsäure (Oxalate), der Weinsäure (Tartrate), Citronensäure (Citrate, basische Citrate, Citrathydrate), Benzoesäure (Benzoate), Salicylate, Milchsäure (Lactat, Lactathydrate), Acrylsäure, Maleinsäure, Bernsteinsäure, von Aminosäuren (Glyzin), von sauren Hydroxofunktionen (Phenolate etc), Para-Phenolsulfonate, Para-Phenolsulfonathydrate, Acetylacetonathydrate, Tannate, Dimethyldithiocarbamate, Trifluormethansulfonat, Alkylsulfonate und/oder Aralkylsulfonate.

Bevorzugt handelt es sich bei den Eisensalzen für den ionischen Einbau und die Cofällung um Eisen(II)- und/oder Eisen(III)-borate, -sulfate, -sulfathydrate, -hydroxosulfathydrate, gemischte -hydroxosulfathydrate, -oxysulfate, -acetate, -nitrate, -fluoride, -fluoridhydrate, -chloride, chloridhydrate, -oxychloride, -bromide, -iodide, -iodidhydrate und/oder -carbonsäurederivate.

Bevorzugt handelt es sich bei den Metallverbindungen um Eisen(II)- und/oder Eisen(III)-acetate, -chloride, -nitrate, -sulfate, -phosphinate, -monoalkylphosphinate, und/oder -alkylphosphonate.

Das in Anspruch 1 genannte Eisen (Komponente B)) liegt üblicherweise in Form eines Eisensalzes bzw. einer Eisenverbindung (Komponente B1)) vor. Bevorzugte Eisensalze sind Eisen(II)monoalkylphosphinate, hierzu gehören Eisen(II)(ethylphosphinat), Eisen(II)(propylphosphinat), Eisen(II)(butylphosphinat, Eisen(II)(n-butylphosphinat), Eisen(II)(sec-butylphosphinat), Eisen(II)(hexylphosphinat) und/oder Eisen(II)(octylphosphinat).

Bevorzugte Eisensalze sind Eisen(III)monoalkylphosphinate, zu denen Eisen-(III)(ethylphosphinat), Eisen(III)(propylphosphinat), Eisen(III)(butylphosphinat), Eisen(III)(n-butylphosphinat, Eisen(III)(sec-butylphosphinat), Eisen(III)(hexylphosphinat), Eisen(III)(hexylphosphinat) und/oder Eisen(III)-(octylphosphinat) gehören.

Bevorzugte Eisensalze sind Eisen(II)alkylphosphonate, zu denen Eisen(II)(ethylphosphonat), Eisen(II)(propylphosphonat), Eisen(II)(butylphosphonat), Eisen(II)(n-butylphosphonat), Eisen(II)(sec-butylphosphonat), Eisen(II)- (hexylphosphonat) und/oder Eisen(II)(octylphosphonat) gehören.

Bevorzugte Eisensalze sind Eisen(III)alkylphosphonate, zu denen Eisen(III)(ethylphosphonat), Eisen(III)(propylphosphonat), Eisen(III)(butylphosphonat), Eisen(III)(n-butylphosphonat), Eisen(III)(sec-butylphosphonat), Eisen(III)(hexylphosphonat) und/oder Eisen(III)(octylphosphonat) gehören.

Bevorzugte cogefällte Eisensalze sind Eisen(II)dialkylphosphinate, zu denen Eisen- (II)bis(diethylphosphinat), Eisen(II)bis(dipropylphosphinat), Eisen(II)-bis(butylethylphosphinat), Eisen(II)bis(n-butylethylphosphinat), Eisen(II)bis(sec-butylethylphosphinat), Eisen(II)bis(hexylethylphosphinat), Eisen(II)-bis(dibutylphosphinat), Eisen(II)bis(hexylbutylphosphinat) und/oder Eisen(II)-bis(octylethylphosphinat) gehören.

Bevorzugte Eisensalze sind Eisen(III)dialkylphosphinate, zu denen Eisen-(III)tris(diethylphosphinat), Eisen(III)tris(dipropylphosphinat), Eisen(III)tris(butylethylphosphinat), Eisen(III)tris(n-butylethylphosphinat), Eisen(III)tris(sec-butylethylphosphinat), Eisen(III)tris(hexylethylphosphinat), Eisen(III)tris(dibutylphosphinat), Eisen(III)tris(hexylbutylphosphinat) und/oder Eisen(III)tris(octylethylphosphinat) gehören.

Für die Stabilität der Flammschutzmittelmischung gegen Entmischung beim Rütteln sind geringe Teilchengrößen bevorzugt.

Besonders bevorzugt sind mittlere Teilchengrößen d₅₀ von Dialkylphosphinsäuresalz 0,01 - 1000 µm, Dialkylphosphinatsalz-Telomersalz-Cofällung 0,01 - 1000 µm, erfindungsgemäße Flammschutzmittelmischung 0,01 - 1000 µm.

Besonders bevorzugt sind mittlere Teilchengrößen d₅₀ von Dialkylphosphinsäuresalz 0,1 - 90 µm, Dialkylphosphinatsalz-Telomersalz-Mischung 0,1 - 90 µm, erfindungsgemäße Flammschutzmittelmischung 0,1 - 90 µm.

Bei den erfindungsgemäßen Verfahren kann jede Form von Hilfsmittel zusetzt werden, die Vorteile im Produktionsverfahren verschafft oder die Produkteigenschaften verbessert.

Bei den erfindungsgemäßen Verfahren können ein oder mehrere Synergisten in einer oder mehreren weiteren Prozessstufen zugemischt werden.

Bevorzugt enthält die flammgeschützte Polymerformmasse
5 bis 45 Gew.-% der erfindungsgemäßen Flammschutzmittelmischung,
5 bis 90 Gew.-% Polymer oder Mischungen derselben,
1 bis 40 Gew.-% Additive und
20 bis 55 Gew.-% Glasfasern.

Bevorzugt entstammen die Polymere aus der Gruppe der thermoplastischen Polymere wie Polyester, Polystyrol oder Polyamid und/oder der duroplastischen Polymere.

Bevorzugt handelt es sich bei den Polymeren um Polymere von Mono- und Diolefinen, beispielsweise Polypropylen, Polyisobutylen, Polybuten-1, Poly-4-methyl-penten-1, Polyisopren oder Polybutadien sowie Polymerisate von Cycloolefinen wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅-C₉) inklusive hydrierte Modifikationen davon (z. B. Klebrigmacherharze) und Mischungen von Polyalkylenen und Stärke.

Bevorzugt handelt es sich bei den Polymeren um Polystyrol (Polystyrol 143E (BASF), Poly-(p-methylstyrol), Poly-(alpha-methylstyrol).

Bevorzugt handelt es sich bei den Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS-, MBS-, ASA- oder AES-Polymere bekannt sind.

Bevorzugt handelt es sich bei den Polymeren um Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2/12, Polyamid 4 (Poly-4-aminobuttersäure, Nylon^{®} 4, Fa. DuPont), Polyamid 4/6 (Poly(tetramethylen-adipamid), Poly-(tetramethylen-adipinsäurediamid), Nylon^{®} 4/6, Fa. DuPont), Polyamid 6 (Polycaprolactam, Poly-6-aminohexansäure, Nylon^{®} 6, Fa. DuPont, Akulon^{®} K122, Fa. DSM; Zytel^{®} 7301, Fa. DuPont; Durethan^{®} B 29, Fa. Bayer), Polyamid 6/6 ((Poly(N,N'-hexamethyleneadipinediamid), Nylon^{®} 6/6 , Fa. DuPont , Zytel^{®} 101, Fa. DuPont; Durethan^{®} A30, Durethan^{®} AKV, Durethan^{®} AM, Fa. Bayer; Ultramid^{®} A3, Fa BASF), Polyamid 6/9 (Poly(hexamethylen nonanediamid), Nylon^{®} 6/9 , Fa. DuPont), Polyamid 6/10 (Poly(hexamethylen sebacamid), Nylon^{®} 6/10 , Fa. DuPont), Polyamid 6/12 (Poly(hexamethylene dodecanediamid), Nylon^{®} 6/12 , Fa. DuPont), Polyamid 6/66 (Poly(hexamethylene adipamide-co-caprolactam), Nylon^{®} 6/66 , Fa. DuPont), Polyamid 7 (Poly-7-aminoheptansäure, Nylon^{®} 7, Fa. DuPont), Polyamid 7,7 (Polyheptamethylenpimelamid, Nylon^{®} 7,7, Fa. DuPont), Polyamid 8 (Poly-8-aminooctansäure, Nylon^{®} 8, Fa. DuPont), Polyamid 8,8 (Polyoctamethylensuberamid, Nylon^{®} 8,8, Fa. DuPont), Polyamid 9 (Poly-9-aminononansäure, Nylon^{®} 9, Fa. DuPont), Polyamid 9,9 (Polynonamethylenazelamid, Nylon^{®} 9,9, Fa. DuPont), Polyamid 10 (Poly-10-amino-decansäure, Nylon^{®} 10, Fa. DuPont), Polyamid 10,9 (Poly(decamethylenazelamid), Nylon^{®} 10,9, Fa. DuPont), Polyamid 10,10 (Polydecamethylensebacamid, Nylon^{®} 10,10, Fa. DuPont), Polyamid 11 (Poly-11-aminoundecansäure, Nylon^{®} 11, Fa. DuPont), Polyamid 12 (Polylauryllactam, Nylon^{®} 12 , Fa. DuPont, Grillamid^{®} L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid Polyhexamethylenterephthalamid) und gegebenenfalls einem Elastomer als Modifikator, z. B. Poly-2,4,4-trimethylhexamethylenterephthalamid oder Poly-m-phenylenisophthalamid.

Blockcopolymere der vorstehend genannten Polyamide mit Polyolefinen, Olefin-Copolymeren, lonomeren oder chemisch gebundenen oder gepfropften Elastomeren; oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Eingesetzt werden können auch aromatische Polyamide wie PA4T, PA6T, PA9T, PA10T, PA11T und/oder MXD6, amorphe Polyamide wie 6I/X und TPE-A "rigid" und "soft".

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex^{®} 2500, Celanex^{®} 2002, Fa Celanese; Ultradur^{®}, FA. BASF), Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

Bevorzugt handelt es sich bei den Polymeren um Polycarbonate, Polyestercarbonate, Polysulfone, Polyethersulfone und Polyetherketone.

Bevorzugt handelt es sich bei den duroplastischen Polymeren um Formaldehyd-, Epoxid-, Melamin- Phenolharz-Polymere und/oder Polyurethane.

Bevorzugt handelt es sich bei den duroplastischen Polymeren um Epoxidharze.

Bevorzugt handelt es sich bei den duroplastischen Polymeren um Epoxidharze, die mit Resolen, Phenolen, Phenolderivaten und/oder Dicyandiamid, Alkoholen und Aminen gehärtet sind.

Bevorzugt handelt es sich bei den Epoxidharzen um Polyepoxidverbindungen.

Bevorzugt stammen die Epoxidharze aus der Gruppe der Novolacke und der Bisphenol A Harze.

Bevorzugt handelt es sich bei dem duroplastischen Polymer um ungesättigte Polyesterharze, Dicyclopentadien-modifizierte ungesättigte Polyester, Polyphenylenether oder Butadien-Polymere; um Block-Copolymere mit einem Polybutadien- oder Polyisopren-Block und einem Block aus Styrol oder alpha-Methylstyrol; um Block-Copolymere mit einem ersten Polybutadien-Block und einem zweiten Polyethylen-Block oder Ethylen-Propylen-Block, um Block-Copolymere mit einem ersten Polyisopren-Block und einem zweiten Polyethylen- oder Ethylen-Propylen-Block.

Bevorzugt handelt es sich bei dem duroplastischen Polymer um ein solches, dass auf epoxidierten pflanzlichen Ölen (epoxidiertes Soyabohnen- /Leinsamenöl), Acrylsäurederivaten (Acrylsäure, Crotonsäure, Isocrotonsäure, Methacrylsäure, Cinnamsäure, Maleinsäure, Fumarsäure, Methylmethacrylsäure) und Hydroxyalkyl-Acrylaten und/oder Hydoxyalkyl-Alkylcrylaten (Hydroxyethylmethacrylat, Hydroxypropyl-methacrylat, Hydroxybutylmethacrylat, Polyethylenglycolmethacrylat) basiert.

Bevorzugt finden die duroplastischen Polymere in elektrischen Schalterteilen, Bauteilen in Automobilbau, Elektrotechnik, Elektronik, Leiterplatten, Prepregs, Vergussmassen für elektronische Bauteile, im Boots- und Rotorblattbau, in GFK-Außenanwendungen, Haushalts- und Sanitäranwendungen, Engineering-Werkstoffen und weiteren Produkten Anwendung.

Bevorzugt handelt es sich bei den duroplastischen Polymeren um ungesättigte Polyesterharze (UP-Harze), die sich von Copolyestern gesättigter und ungesättigter, mehrwertiger insbesondere Dicarbonsäuren oder deren Anhydride mit mehrwertigen Alkoholen, sowie Vinylverbindungen als Vernetzungsmittel ableiten.

UP-Harze werden gehärtet durch radikalische Polymerisation mit Initiatoren (z. B. Peroxiden) und Beschleunigern.

Ungesättigte Polyester können die Estergruppe als Verbindungsglied in der Polymerkette enthalten.

Bevorzugte ungesättigte Dicarbonsäuren und -derivate zur Herstellung der Polyester sind Maleinsäure, Maleinsäureanhydrid und Fumarsäure, Itaconsäure, Citraconsäure, Mesaconsäure. Diese können abgemischt sein mit bis zu 200 Mol-%, bezogen auf die ungesättigten Säurekomponenten, mindestens einer aliphatischen gesättigten oder cycloaliphatischen Dicarbonsäure.

Bevorzugte gesättigte Dicarbonsäuren sind Phthalsäure, Isophthalsäure, Terephthalsäure, Dihydrophthalsäure, Tetrahydrophthalsäure, Hexahydrophthalsäure, Endomethylentetrahydrophthalsäure, Adipinsäure, Bernsteinsäure, Sebacinsäure, Glutarsäure, Methylglutarsäure, Pimelinsäure.

Bevorzugte mehrwertige, insbesondere zweiwertige, gegebenenfalls ungesättigte Alkohole sind die üblichen acyclische oder cyclische Gruppen aufweisenden Alkandiole und Oxaalkandiole.

Bevorzugte mit ungesättigten Polyestern copolymerisierbare ungesättigte Monomere tragen bevorzugt Vinyl-, Vinyliden- oder Allylgruppen, z. B. bevorzugt Styrol, aber auch beispielsweise kernalkylierte bzw. -alkenylierte Styrole, wobei die Alkylgruppen 1 - 4 Kohlenstoffatome enthalten können, z. B. Vinyltoluol, Divinylbenzol, alpha-Methylstyrol, tert.- Butylstyrol; Vinylester von Carbonsäuren mit 2 - 6 Kohlenstoffatomen, bevorzugt Vinylacetat, Vinylpropionat, Vinylbenzoat; Vinylpyridin, Vinylnaphthalin, Vinylcyclohexan, Acrylsäure und Methacrylsäure und/oder ihre Ester (vorzugsweise Vinyl-, Allyl und Methallylester) mit 1-4 Kohlenstoffatomen in der Alkoholkomponente, ihre Amide und Nitrile, Maleinsäureanhydrid, -halb- und -diester mit 1 - 4 Kohlenstoffatomen in der Alkoholkomponente, -halb- und -diamide oder cyclische Imide wie Butylacrylat, Methylmethacrylat, Acrylnitril, N-Methylmaleinimid oder N-Cyclohexylmaleinimid; Allylverbindungen wie Allylbenzol und Allylester wie Allylacetat, Phthalsäurediallylester, Isophthalsäurediallylester, Fumarsäurediallyl-ester, Allylcarbonate, Diallylphthallate, Diallylcarbonate, Triallylphosphat und Triallylcyanurat.

Bevorzugte Vinylverbindung zur Vernetzung ist Styrol.

Bevorzugte ungesättigte Polyester können die Estergruppe auch in der Seitenkette tragen wie z. B. Polyacrylester und Polymethacrylester.

Bevorzugte Härtersysteme sind Peroxide und Beschleuniger.

Bevorzugte Beschleuniger sind Metallcoinitiatoren und aromatische Amine und/oder UV-Licht und Photosensibilisatoren, z. B. Benzoinether sowie Azokatalysatoren wie Azoisobutyronitril, Mercaptane wie Laurylmercaptan, Bis-(2-ethylhexyl)sulfid und Bis-(2-mercaptoethyl)sulfid.

Ein Verfahren zur Herstellung von flammgeschützten Copolymerisaten ist dadurch gekennzeichnet, dass man mindestens ein ethylenisch ungesättigtes Dicarbonsäureanhydrid, abgeleitet von mindestens einer C₄-C₈-Dicarbonsäure, mindestens eine vinylaromatische Verbindung und mindestens einem Polyol copolymerisiert und dann mit den erfindungsgemäßen Flammschutzmittelmischungen umsetzt.

Bevorzugt einsetzbar sind Dicyclopentadien-modifizierte ungesättigte Polyester, die durch Reaktion von Dicyclopentadien, Maleinsäureanhydrid, Wasser, gesättigter Alkohol und gegebenenfalls einer weiteren mehrwertige Säure erhalten werden. Der Polyester wird mit einem radikalisch polymerisierbaren Monomer wie Styrol zum Harz vernetzt.

Bevorzugt handelt es sich bei den Polymeren um vernetzte Polymere, die sich von Aldehyden bzw. von Phenolen, Harnstoff oder Melamin ableiten, wie Phenol-Formaldehyd-, Harnstoff-Formaldehyd- und Melamin-Formaldehydharze.

Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern wie z. B. Anhydriden oder Aminen mit oder ohne Beschleunigern vernetzt werden.

Bevorzugte Duroplasten sind Polymere aus der Klasse der Cyanatester, Cyanatester/Bismaleimid-Copolymer, Bismaleimid-Triazin-Epoxy-Blends und Butadien-Polymere.

Bevorzugte Butadien-Polymere sind Blockcopolymere, die 70 - 95 Gew.-% ein oder mehrerer Monovinylsubstitutierter aromatischer Kohlenwasserstoffverbindung mit 8 - 18 C-Atomen und 30 - 5 % Gew.-% eines oder mehrerer konjugierter Diene mit 4 - 12 C-Atomen und wahlweise Vernetzer enthalten.

Bevorzugt werden die erfindungsgemäße Flammschutzmittelmischungen auch in Harzsystemen verwendet, die aus Polybutadien- oder Polyisopren-Harzen oder Mischungen derselben mit ungesättigten Butadien- oder Isopren-enthaltenden Polymeren bestehen, die an einer Vernetzung teilnehmen können.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. von Bisphenol-A-diglycidylethern, Bisphenol-F-di-glycidylethern, die mittels üblichen Härtern und/oder Beschleunigern vernetzt werden.

Geeignete Glycidylverbindungen sind Bisphenol-A-diglycidylester, Bisphenol-F-diglycidylester, Polyglycidylester von Phenol-Formaldehydharzen und Kresol-Formaldehydharzen, Polyglycidylester von Pththal-, Isophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen.

Geeignete Härter sind aliphatische, cycloaliphatische, aromatische und heterocyclische Amine oder Polyamine wie Ethylendiamin, Diethylentriamin Triethylentetramin, Propan-1,3-diamin, Hexamethylendiamin, Aminoethylpiperazin, Isophorondiamin, Polyamidoamin, Diaminodiphenylmethan, Diaminodiphenylether, Diaminodiphenolsulfone, Anilin-Formaldehyd-Harze, 2,2,4-Trimethylhexan-1,6-diamin, m-Xylylendiamin, Bis(4-aminocyclohexyl)methan, 2,2-Bis(4-aminocyclohexyl)propan, 3-Aminomethyl-3,5,5-trimethylcyclohexylamin (Isophorondiamin), Polyamidoamine, Cyanguanidin und Dicyandiamid, ebenso mehrbasige Säuren oder deren Anhydride wie z. B. Phthalsäureanhydrid, Maleinsäureanhydrid, Tetrahydrophthalsäureanhydrid, Methyltetrahydrophthalsäureanhydrid, Hexahydrophthalsäureanhydrid und Methylhexahydrophthalsäureanhydrid sowie Phenole wie z. B. Phenol-Novolak-Harz, Cresol-Novolak-Harz, Dicyclopentadien-Phenol-Addukt-Harz, Phenolaralkyl-Harz, Cresolaralkyl-Harz, Naphtholaralkyl-Harz, Biphenol-modifiziertes Phenolaralkyl-Harz, Phenoltrimethylolmethan-Harz, Tetraphenylolethan-Harz, Naphthol-Novolak-Harz, Naphthol-Phenol-Kocondensat-Harz, Naphthol-Cresol-Kocondensat-Harz, Biphenol- modifiziertes Phenol-Harz und Aminotriazinmodifiziertes Phenol-Harz. Alle Härter können alleine oder in Kombination miteinander eingesetzt werden.

Geeignete Katalysatoren bzw. Beschleuniger für die Vernetzung bei der Polymerisation sind tertiäre Amine, Benzyldimethylamin, N-Alkylpyridine, Imidazol, 1-Methylimidazol, 2-Methylimidazol, 2-Ethyl-4-methylimidazol, 2-Ethyl-4-methylimidazol, 2-Phenylimidazol, 2-Heptadecylimidazol, Metallsalze organischer Säuren, Lewis Säuren und Amin-Komplex-Salze.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze. Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugte Polyester-Polyole werden durch Polykondensation eines Polyalkoholes wie Ethylenglykol, Diethylenglykol, Propylenglykol, 1,4-Butandiol, 1,5-Pentandiol, Methylpentandiol, 1,6-Hexandiol, Trimethylolpropan, Glycerin, Pentaerythritol, Diglycerol, Traubenzucker und/oder Sorbit, mit einer dibasischen Säure wie Oxalsäure, Malonsäure, Bernsteinsäure, Weinsäure, Adipinsäure, Sebacinsäure, Maleinsäure, Fumarsäure, Phthalsäure und/oder Terephthalsäure erhalten. Diese Polyester-Polyole können alleine oder in Kombination benutzt werden.

Geeignete Polyisocyanate sind aromatische, alicyclische und/oder aliphatische Polyisocyanate mit nicht weniger als zwei Isocyanat-Groupen und Mischungen davon. Bevorzugt sind aromatische Polyisocyanate wie Tolyldiisocyanat, Methylendiphenyldiisocyanat, Naphthylendiisocyanate, Xylylendiisocyanat, Tris-4-isocyanatophenylmethan und Polymethylenpolyphenylendiisocyanate; alicyclische Polyisocyanate wie Methylendiphenyldiisocyanat, Tolyldiisocyanat; aliphatische Polyisocyanate und Hexamethylendiisocyanat, Isophorendiisocyanat, Demeryldiisocyanat, 1,1-Methylenbis(4-isocyanatocyclohexan-4,4'-Diisocyanatodicyclohexylmethan-Isomerengemisch, 1,4-Cyclohexyldiisocyanat, Desmodur^{®}-Typen (Bayer) und Lysindiisocyanat und Mischungen davon.

Geeignete Polyisocyanate sind modifizierte Produkte, die durch Reaktion von Polyisocyanat mit Polyol, Harnstoff, Carbodiimid und/oder Biuret erhalten werden.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z. B. von Epoxyacrylaten, Urethan-acrylaten oder Polyester-acrylaten.

Bevorzugt handelt es sich bei den Polymeren um Mischungen (Polyblends) der vorgenannten Polymeren, wie z. B. PP/EPDM (Polypropylen/ Ethylen-Propylen-Dien-Kautschuk), Polyamid/EPDM oder ABS (Polyamid/Ethylen-Propylen-DienKautschuk oder Acrylnitril-Butadien-Styrol), PVC/EVA (Polyvinylchlorid/ Ethylenvinylacetat), PVC/ABS (Polyvinylchlorid/Acrylnitril-Butadien-Styrol), PVC/MBS (Polyvinylchlorid/ Methacrylat-Butadien-Styrol), PC/ABS (Polycarbonat/Acrylnitril-Butadien-Styrol), PBTP/ABS (Polybutylenterephthalat /Acrylnitril-Butadien-Styrol), PC/ASA (Polycarbonat/Acrylester-Styrol-Acrylnitril), PC/PBT (Polycarbonat/Polybutylen-terephthalat), PVC/CPE (Polyvinylchlorid/chloriertes Polyethylen), PVC/Acrylate (Polyvinylchlorid/Acrylate, POM/thermoplastisches PUR (Polyoxymethylen / thermoplastisches Polyurethan), PC/thermoplastisches PUR (Polycarbonat / thermoplastisches Polyurethan), POM/Acrylat (Polyoxymethylen/Acrylat), POM/MBS (Polyoxymethylen/ Methacrylat-Butadien-Styrol), PPO/HIPS (Polyphenylenoxid /High impact polystyrol), PPO/PA 6.6 (Polyphenylenoxid /Polyamid 6.6) und Copolymere, PA/HDPE (Polyamid /High Density Polyethylen), PA/PP (Polyamid / Polyethylen), PA/PPO (Polyamid / Polyphenylenoxid), PBT/PC/ABS (Polybutylenterephthalat / Polycarbonat / Acrylnitril-Butadien-Styrol) und/ oder PBT/PET/PC (Polybutylenterephthalat / Polyethylenterephthalat / Polycarbonat).

Bevorzugt weist die hergestellte Formmasse eine rechteckige Form mit regelmäßiger oder unregelmäßiger Grundfläche, Würfelform, Quaderform, Kissenform, Prismenform auf.

Die erfindungsgemäßen Flammschutzmittelmischungen können auch in Elastomeren wie etwa Nitrilkautschuk, Nitrilkautschuk mit Carboxyl-Gruppen und Carboxyl-terminierten Butadien-Acrylnitril, Chloropren-Kautschuk, Butadien-Kautschuk, Acrylnitril-Butadien-Kautschuk, Styrol-Butadien-Kautschuk, Butadien-Kautschuk mit Acrylharz und thermoplastischem Polyimid, urethanmodifiziertes Copolyesterpolymer und anderen Elastomeren eingesetzt werden.

Bevorzugte weitere Additive in den erfindungsgemäßen Flammschutzmittel-Mischungen sind aus der Gruppe der Carbodiimide und/oder (Poly-)isocyanate.

Bevorzugte weitere Additive kommen aus der Gruppe der sterisch gehinderten Phenole (z. B. Hostanox^{®} OSP 1), sterisch gehinderten Amine und Lichtstabilisatoren (z. B. Chimasorb^{®} 944, Hostavin^{®}-Typen), Phosphonite und Antioxidantien (z. B. Sandostab^{®} PEPQ der Fa. Clariant) und Trennmittel (Licomont^{®}-Typen der Fa. Clariant).

Bevorzugte Füllstoffe in den erfindungsgemäßen Flammschutzmittel-Mischungen sind Sauerstoffverbindungen des Siliciums, Magnesiumverbindungen, z. B. Metallcarbonate von Metallen der zweiten Hauptgruppe des Periodensystems, Magnesiumoxid, Magnesiumhydroxid, Hydrotalcite, Dihydrotalcit, Magnesium-Carbonate oder Magnesium-Calcium-Carbonate, Calciumverbindungen, z. B. Calciumhydroxid, Calciumoxid, Hydrocalumit, Aluminiumverbindungen, z. B. Aluminiumoxid, Aluminiumhydroxid, Böhmit, Gibbsit oder Aluminiumphosphat, roter Phosphor, Zink- und/oder Aluminiumverbindungen.

Bevorzugte weitere Füllstoffe sind Glaskugeln.

Glasfasern werden bevorzugt als Verstärkungsstoffe eingesetzt.

Erfindungsgemäß einsetzbare Compoundieraggregate sind Mehrzonenschnecken-Extruder mit Dreizonenschnecken und/oder Kurzkompressionsschnecken.

Erfindungsgemäß einsetzbare Compoundieraggregate sind auch Ko-Kneter z. B. von Fa. Coperion Buss Compounding Systems, CH-Pratteln, z. B. MDK/E46-11D und/oder Laborkneter (MDK 46 der Firma Buss, Schweiz mit L=11D).

Erfindungsgemäß einsetzbare Compoundieraggregate sind Doppelschneckenextruder z. B. der Fa. Coperion Werner & Pfleiderer GmbH & Co.KG, Stuttgart (ZSK 25, ZSK30, ZSK 40, ZSK 58, ZSK MEGAcompounder 40, 50, 58, 70, 92, 119, 177, 250, 320, 350, 380) und/oder der Fa. Berstorff GmbH, Hannover, Leistritz Extrusionstechnik GmbH, Nürnberg.

Erfindungsgemäß einsetzbare Compoundieraggregate sind Ring-Extruder z. B. der Fa. 3+Extruder GmbH, Laufen mit einem Ring von drei bis zwölf kleinen Schnecken, die um einem statischen Kern rotieren und/oder Planetwalzenextruder z. B. der Fa. Entex, Bochum und/oder Entgasungs-Extruder und/oder Kaskadenextruder und/oder Maillefer-Schecken.

Erfindungsgemäß einsetzbare Compoundieraggregate sind Compounder mit gegenläufiger Doppelschnecke z. B. Compex 37- bzw. -70-Typen der Fa. Krauss-Maffei Berstorff.

Erfindungsgemäße wirksame Schneckenlängen (L) sind bei Einwellenextrudern bzw. Einschneckenextrudern 20 bis 40D; bei Doppelschneckenextrudern 8 bis 48D und bei Mehrzonenschneckenextudern z. B. 25D mit Einzugzone (L=10D), Übergangszone (L=6D) und Ausstoßzone (L=9D).

Die Erfindung betrifft zudem die Verwendung der erfindungsgemäßen Flammschutzmittelmischung nach einem oder mehreren der Ansprüche 1 bis 9 in oder für Steckverbinder, stromberührten Teilen in Stromverteilern (FI-Schutz), Platinen, Vergußmassen, Stromsteckern, Schutzschaltern, Lampengehäuse, LED Gehäuse, Kondensatorgehäuse, Spulenkörper und Ventilatoren, Schutzkontakte, Stecker, in/auf Platinen, Gehäuse für Stecker, Kabel, flexible Leiterplatten, Ladekabel für Handys, Motorabdeckungen, Textilbeschichtungen und anderen Produkten.

Hierzu gehören Formkörper in Form von Bauteilen für den Elektro/Elektronikbereich, insbesondere für Teile von Leiterplatten, Gehäusen, Folien, Leitungen, Schaltern, Verteilern, Relais, Widerständen, Kondensatoren, Spulen, Lampen, Dioden, LED, Transistoren, Konnektoren, Reglern, Speichern und Sensoren, in Form von großflächigen Bauteilen, insbesondere von Gehäuseteilen für Schaltschränke und in Form aufwendig gestalteter Bauteile mit anspruchsvoller Geometrie.

Bevorzugt beträgt bei solchen Formkörpern die Wandstärke weniger als 0,5 mm, kann aber auch mehr als 1,5 mm (bis zu 10 mm) betragen. Besonders geeignet sind weniger als 1,5 mm, mehr bevorzugt weniger als 1 mm und besonders bevorzugt weniger als 0,5 mm

Die erfindungsgemäße Flammschutzmittelmischung wird bevorzugt mit Glasfasern mit einem arithmetischen Mittel der Länge von 100 bis 220 µm zur Herstellung von flammgeschützten Polyamidformmassen und/oder Formteilen eingesetzt, wobei , der Herstellungsprozess für die Polyamidformmasse bzw. das Formteil so eingestellt wird, dass in der resultierenden Polyamidformmasse bzw. dem Formteil die Glasfasern ein arithmetisches Mittel der Länge im Bereich von 100 bis 220 µm aufweisen und wobei die Polyamidformmasse bzw. das Formteil bevorzugt nach IEC 60695-11-10 der (UL94) als V-0 klassifiziert ist.

Herstellung, Verarbeitung und Prüfung von flammgeschützten PolymerFormmassen und Polymer-Formkörpern.

Die Flammschutzmittelkomponenten werden mit dem Polymergranulat und evtl. Additiven vermischt und über den Seiteneinzug eines Doppelschnecken-Extruders (Typ Leistritz ZSE 27/44D) bei Temperaturen von 230 bis 260 °C (glasfaserverstärktes PBT), 260 - 310 °C in PA 6.6 bzw. bei 250 - 275 °C in PA 6 eingearbeitet. Die Glasfasern wurden über einen zweiten Seiteneinzug zugegeben. Der homogenisierte Polymerstrang wurde abgezogen, im Wasserbad gekühlt und anschließend zu flammgeschützten Polymerformmassen granuliert.

Nach ausreichender Trocknung wurden die Formmassen auf einer Spritzgießmaschine (Typ Arburg 320 C Allrounder) bei Massetemperaturen von 240 bis 300 °C zu flammgeschützten Polymer-Formkörper verarbeitet. Diese können als Prüfkörper verwendet und anhand des UL 94-Tests (Underwriter Laboratories) auf Flammwidrigkeit geprüft und klassifiziert werden.

Bestimmung des Verarbeitungsfensters von PA-GF30-Compound im isothermen DSC-Test:
Entsprechend der vorgenannten allgemeinen Vorschrift werden flammgeschützte Polymerformmassen und flammgeschützte Polymerformkörper hergestellt. Die Zusammensetzung ist 49,7 Gew.-% Polyamid (Ultramid^{®} A 27 E 01 der Fa. BASF SE), 30 Gew.-% Glasfasern (PPG Glasfaser HP 3610 EC10 der Fa. PPG), 12,6 Gew.-% erfindungsgemäße Flammschutzmittelmischung entsprechend der Beispiele, 6,6 Gew.-% Melaminpolyphosphat (MPP) (Melapur^{®} 200/70 der Fa. BASF, 0,8 Gew.-% Zinkborat (Firebrake^{®} 500 der Fa. Rio Tinto Minerals), 0,3 Gew.-% Wachs (Licowax^{®} E Gran der Fa. Clariant).

Da die untere Grenze des Verarbeitungsfensters nicht beeinflusst wird, wird als Maß für das Verarbeitungsfenster die Zersetzung der flammgeschützte Polymerformmasse an der oberen Grenze bestimmt. Dazu dient der Gewichtsverlust bei einer definierten Temperatur.

Mit DSC (Differentialthermoanalyse) wird an Luft nach 60 min Haltezeit der Gewichtsverlust bei 330 °C in Gew.-% bestimmt.

Die Rieselfähigkeit der erfindungsgemäßen Flammschutzmittelmischung wird nach Pfrengle (DIN ISO 4324 Tenside, Pulver und Granulate, Bestimmung des Schüttwinkels, Dez. 1983, Beuth Verlag Berlin) bestimmt.

Die vorgenannte Rieselfähigkeit wird durch die Ermittlung der Höhe des Kegels eines Pulvers oder Granulates beziehungsweise des Verhältnisses von Kegelradius zu Kegelhöhe bestimmt. Der Kegel wird erzeugt, indem eine spezielle Menge der zu untersuchenden Substanz in einer definierten Apparatur durch einen speziellen Trichter ausgeschüttet wird. Der definierte Kegelradius wird erzeugt, indem der Kegel aufgeschüttet wird, bis das Produkt über eine vom Untergrund erhabene kreisrunde Platte überfließt. Der Radius der Platte ist festgelegt. Der Trichter hat einen Innendurchmesser von 10 mm. Die Platte hat einen Radius von 50 mm. Die Kegelhöhe wird in Millimeter mit einer Messleiste, von der Platte ausgehend zum Gipfel des Kegels, ausgemessen. Es werden 5 Bestimmungen durchgeführt und gemittelt. Das Verhältnis von Kegelradius (50 mm) zu Kegelhöhe wird aus dem Mittelwert berechnet.

An einer Flammschutzmittelmischung nach dem Stand der Technik wurden Schüttkegelhöhen von 29,9 bis 49,9 mm entsprechend einer Spanne von 20 mm bestimmt und Verhältnisse von Radius zu Höhe (=cot alpha) von 1,67 bis 1,00 entsprechend einer Spanne von 0,67.

An Prüfkörpern aus jeder Mischung wurden die Brandklasse UL 94 (Underwriter Laboratories) an Probekörpern der Dicke 1,5 mm bestimmt.

Nach UL 94 ergeben sich folgende Brandklassen:

| | |
|---|---|
| V-0 | kein Nachbrennen länger als 10 sec, Summe der Nachbrennzeiten bei 10 Beflammungen nicht grösser als 50 sec, kein brennendes Abtropfen, kein vollständiges Abbrennen der Probe, kein Nachglühen der Proben länger als 30 sec nach Beflammungsende |
| V-1 | kein Nachbrennen länger als 30 sec nach Beflammungsende, Summe der Nachbrennzeiten bei 10 Beflammungen nicht grösser als 250 sec, kein |
| | Nachglühen der Proben länger als 60 sec nach Beflammungsende, übrige Kriterien wie bei V-0 |
| V-2 | Zündung der Watte durch brennendes Abtropfen, übrige Kriterien wie bei V-1 |

Nicht klassifizierbar (nkl) erfüllt nicht die Brandklasse V-2.

Bei den nachfolgenden Beispielen wird die thermische Beständigkeit jeweils an der erfindungsgemäßen Flammschutzmittelmischung und das Verarbeitungsfenster an der flammgeschützten polymeren Formmasse bestimmt.

### Beispiel 1

Nach DE-A-10359815 wird eine Natriumdiethylphosphinatlösung mit 7,71 Gew.-% P-Gehalt hergestellt. 2652 g dieser Lösung werden vorgelegt und bei 80 °C mit einer Mischung von 1348 g Aluminiumsulfatlösung, 70 mg 22 gew.-%iger Eisen(III)-sulfatlösung und entionisiertem Wasser versetzt. Die Kristallsuspension wird heiß durch eine Saugnutsche filtriert und mit heißem Wasser gewaschen. Das filterfeuchte Produkt wird ca. 18 h bei 120 °C unter Stickstoffatmosphäre in einem Trockenschrank getrocknet und enthält dann 0,2 Gew.-% Restfeuchte (RF) und 18 ppm Eisen.

Das Eisenphosphinat ist mit Aluminiumphosphinat cogefällt.

Die thermische Beständigkeit und das Verarbeitungsfenster (beide siehe Tabellen) sind reinem Aluminiumdiethylphosphinat (Vergleichsbeispiel 16) überlegen.

### Beispiel 2

Nach DE-A-10359815 wird eine Natriumdiethylphosphinatlösung mit 7,71 Gew.-% P-Gehalt hergestellt. Nach Beispiel 1 wird sie unter Verwendung von 0,2 g 22 %iger Eisen(III)sulfat lösung zu einem Produkt verarbeitet, das 0,2 Gew.-% RF und 52 ppm Eisen enthält. Das Eisenphosphinat ist mit Aluminiumphosphinat cogefällt.

Die thermische Beständigkeit und das Verarbeitungsfenster (beide siehe Tabelle) sind reinem Aluminiumdiethylphosphinat (Vergleichsbeispiel 16) überlegen.

### Beispiel 3

Nach DE-A-10359815 wird eine Natriumdiethylphosphinatlösung mit 7,71 Gew.-% P-Gehalt hergestellt. Nach Beispiel 1 wird sie unter Verwendung von 3,9 g 22 %iger Eisen(III)sulfat lösung zu einem Produkt verarbeitet, das 0,2 Gew.-% RF und 1015 ppm Eisen enthält. Das Eisenphosphinat ist mit Aluminiumphosphinat cogefällt.

Die thermische Beständigkeit und das Verarbeitungsfenster (beide siehe Tabelle) sind reinem Aluminiumdiethylphosphinat (Vergleichsbeispiel 16) überlegen.

### Beispiel 4

Nach DE-A-10359815 wird eine Natriumdiethylphosphinatlösung mit 7,71 Gew.-% P-Gehalt hergestellt. Nach Beispiel 1 wird sie unter Verwendung von 52 g 22 %iger Eisen(III)sulfat lösung zu einem Produkt verarbeitet, das 0,1 Gew.-% RF und 13701 ppm Eisen enthält. Das Eisenphosphinat ist mit Aluminiumphosphinat cogefällt.

Die thermische Beständigkeit und das Verarbeitungsfenster (beide siehe Tabelle) sind reinem Aluminiumdiethylphosphinat (Vergleichsbeispiel 16) überlegen.

### Beispiel 5

Nach DE-A-10359815 wird eine Natriumdiethylphosphinatlösung, die sec-Butylethylphosphinat (1-Methylpropyl-Ethylphosphinat) als Telomee enthält und 7,71 Gew.-% P-Gehalt hergestellt. 2652 g dieser Lösung werden zeitgleich mit 1364 g Aluminiumsulfatlösung bei 80 °C zu entionisiertem Wasser dosiert. Danach werden in den entstandenen Überschuß von Natriumdiethylphosphinat 70 mg 22 %ige Eisen(III)sulfatlösung gegeben. Die erhaltene Kristallsuspension wird heiß durch eine Saugnutsche filtriert und mit heißem Wasser gewaschen. Das filterfeuchte Produkt wird ca. 18 h bei 120 °C unter Stickstoffatmosphäre in einem Trockenschrank getrocknet und enthält dann 0,1 Gew.-% Restfeuchte (RF), 0,2 P-% sec-Butylethylphosphinat und 18 ppm Eisen.

Das Telomer-Aluminiumsalz ist in das Kristallgitter des Diethylphosphinsäure-Aluminiumsalzes eingebaut, das Eisenphosphinat cogefällt.

Die thermische Beständigkeit und das Verarbeitungsfenster (beide siehe Tabelle) sind reinem Aluminiumdiethylphosphinat (Vergleichsbeispiel 16) überlegen.

### Beispiel 6

Nach DE-A-10359815 wird eine Natriumdiethylphosphinatlösung mit n-Butylethylphosphinat als Telomee und 7,71 Gew.-% P-Gehalt hergestellt. 2652 g dieser Lösung werden zeitgleich mit 1364 g Aluminiumsulfatlösung bei 80 °C zu entionisiertem Wasser dosiert. Danach werden in den entstandenen Überschuss von Natriumdiethylphosphinat 0,2 g 22 %ige Eisen(III)sulfatlösung gegeben. Die Kristallsuspension wird heiß durch eine Saugnutsche filtriert und mit heißem Wasser gewaschen. Das filterfeuchte Produkt wird ca. 18 h bei 120 °C unter Stickstoffatmosphäre in einem Trockenschrank getrocknet und enthält dann 0,1 Gew.-% Restfeuchte (RF), 0,9 P-% n-Butylethylphosphinat und 52 ppm Eisen. Das Telomer-Aluminiumsalz ist in das Kristallgitter des Diethylphosphinsäure-Aluminiumsalzes eingebaut, das Eisenphosphinat cogefällt.

Die thermische Beständigkeit und das Verarbeitungsfenster (beide siehe Tabelle) sind reinem Aluminiumdiethylphosphinat (Vergleichsbeispiel 16) überlegen.

### Beispiel 7

Nach DE-A-10359815 wird eine Natriumdiethylphosphinatlösung mit n-Butylethylphosphinat als Telomer und 7,71 Gew.-% P-Gehalt hergestellt. 2652 g dieser Lösung werden zeitgleich mit 1355 g Aluminiumsulfatlösung bei 80 °C zu entionisiertem Wasser dosiert. In den entstandenen Überschuss von Natriumdiethylphosphinat werden 3,9 g 22 %ige Eisen(III)sulfatlösung gegeben. Die Kristallsuspension wird heiß durch eine Saugnutsche filtriert und mit heißem Wasser gewaschen. Das filterfeuchte Produkt wird ca. 18 h bei 120 °C unter Stickstoffatmosphäre in einem Trockenschrank getrocknet und enthält dann 0,2 Gew.-% Restfeuchte (RF), 4 P-% n-Butylethylphosphinat und 1019 ppm Eisen. Das Telomer-Aluminiumsalz ist in das Kristallgitter des Diethylphosphinsäure-Aluminiumsalzes eingebaut, das Eisenphosphinat ist cogefällt.

Die thermische Beständigkeit und das Verarbeitungsfenster (beide siehe Tabelle) sind reinem Aluminiumdiethylphosphinat (Vergleichsbeispiel 16) überlegen.

### Beispiel 8

Nach DE-A-10359815 wird eine Natriumdiethylphosphinatlösung mit n-Butylethylphosphinat als Telomer und 7,71 Gew.-% P-Gehalt hergestellt. 2652 g dieser Lösung werden zeitgleich mit 1238 g Aluminiumsulfatlösung bei 80 °C zu entionisiertem Wasser dosiert. In den entstandenen Überschuss von Natriumdiethylphosphinat werden 52 g 22 %ige Eisen(III)sulfatlösung gegeben. Die Kristallsuspension wird heiß durch eine Saugnutsche filtriert und mit heißem Wasser gewaschen. Das filterfeuchte Produkt wird ca. 18 h bei 120 °C unter Stickstoffatmosphäre in einem Trockenschrank getrocknet und enthält dann 0,2 Gew.-% Restfeuchte (RF), 10 P-% n-Butylethylphosphinat und 13783 ppm Eisen.

Das Telomer-Aluminiumsalz ist in das Kristallgitter des Diethylphosphinsäure-Aluminiumsalzes eingebaut, das Eisenphosphinat ist cogefällt.

Die thermische Beständigkeit und das Verarbeitungsfenster (beide siehe Tabelle) sind reinem Aluminiumdiethylphosphinat (Vergleichsbeispiel 16) überlegen.

### Beispiel 9

1364 g Aluminiumsulfatlösung, der 0,2 g 22 %iger Eisen(III)sulfatlösung zugesetzt sind, werden mit 3800 g entionisiertem Wasser vorgelegt. Nach DE-A-10359815 werden 2652 g einer Natriumdiethylphosphinatlösung mit
sec-Butylethylphosphinat (1-Methylpropyl-Ethylphosphinat) als Telomer und 7,71 Gew.-% P-Gehalt hergestellt und diese bei 100 °C zu der Vorlage zudosiert. Die Kristallsuspension wird heiß durch eine Saugnutsche filtriert und mit heißem Wasser gewaschen. Das filterfeuchte Produkt wird ca. 18 h bei 120 °C unter Stickstoffatmosphäre in einem Trockenschrank getrocknet und enthält 0,1 Gew.-% Restfeuchte (RF), 0,1 P-% sec-Butylethylphosphinat und 52 ppm Eisen.

Das sec-Butylethylphosphinat ist als Aluminiumsalzmit dem Aluminium-Diethylphosphinsäuresalz und dem Eisen-Diethylphosphinsäuresalz cogefällt, d. h. mikroskopisch fein, nicht auftrennbar verbunden.

Die thermische Beständigkeit und das Verarbeitungsfenster (beide siehe Tabelle) sind reinem Aluminiumdiethylphosphinat (Vergleichsbeispiel 16) überlegen.

### Beispiel 10

1364 g Aluminiumsulfatlösung, der 0,23 g 22 %iger Eisen(II)sulfatlösung zugesetzt sind, werden mit 3800 g entionisiertem Wasser vorgelegt. Nach DE-A-10359815 werden 2652 g einer Natriumdiethylphosphinatlösung mit n-Butylethylphosphinat als Telomer und 7,71 Gew.-% P-Gehalt hergestellt und diese bei 100 °C zu der Vorlage zudosiert. Die Kristallsuspension wird heiß durch eine Saugnutsche filtriert und mit heißem Wasser gewaschen. Das filterfeuchte Produkt wird ca. 18 h bei 120 °C unter Stickstoffatmosphäre in einem Trockenschrank getrocknet und enthält 0,2 Gew.-% Restfeuchte (RF), 0,1 P-% n-Butylethylphosphinat und 61 ppm Eisen.

Das n-Butylethylphosphinat ist als Aluminiumsalzmit dem Aluminium-Diethylphosphinsäuresalz und dem Eisen-Diethylphosphinsäuresalz cogefällt, d. h. mikroskopisch fein, nicht auftrennbar verbunden.

Die thermische Beständigkeit und das Verarbeitungsfenster (beide siehe Tabelle) sind reinem Aluminiumdiethylphosphinat (Vergleichsbeispiel 16) überlegen.

### Beispiel 11

1364 g Aluminiumsulfatlösung, der 0,2 g 22 %iger Eisen(III)sulfatlösung zugesetzt sind, werden mit 3800 g entionisiertem Wasser vorgelegt. Nach DE-A-10359815 werden 2652 g einer Natriumdiethylphosphinatlösung mit n-Butylethylphosphinat und sec-Butylethylphosphinat als Telomere und 7,71 Gew.-% P-Gehalt hergestellt und diese bei 100 °C zu der Vorlage zudosiert. Die Kristallsuspension wird heiß durch eine Saugnutsche filtriert und mit der 15-fachen Menge des Feststoffes an heißem Wasser gewaschen. Das filterfeuchte Produkt wird ca. 18 h bei 120 °C unter Stickstoffatmosphäre in einem Trockenschrank getrocknet und enthält 0,1 Gew.-% Restfeuchte (RF), 0,4 P-% n-Butylethylphosphinat, 0,9 P-% sec-Butylethylphosphinat und 53 ppm Eisen.

Das n-Butylethylphosphinat und das sec-Butylethylphosphinat ist als Aluminiumsalzmit dem Aluminium-Diethylphosphinsäuresalz und dem Eisen-Diethylphosphinsäuresalz cogefällt, d.h. mikroskopisch fein, nicht auftrennbar verbunden.

Die thermische Beständigkeit und das Verarbeitungsfenster (beide siehe Tabelle) sind reinem Aluminiumdiethylphosphinat (Vergleichsbeispiel 16) überlegen.

### Beispiel 12

1355 g Aluminiumsulfatlösung, der 0,39 g 22 %iger Eisen(III)sulfatlösung zugesetzt sind, werden mit 3800 g entionisiertem Wasser vorgelegt. Nach DE-A-10359815 werden 2652 g einer Natriumdiethylphosphinatlösung mit n-Butylethylphosphinat als Telomer und 7,71 Gew.-% P-Gehalt hergestellt und diese bei 100 °C zu der Vorlage zudosiert. Die Kristallsuspension wird heiß durch eine Saugnutsche filtriert und mit heißem Wasser gewaschen. Das filterfeuchte Produkt wird ca. 18 h bei 120 °C unter Stickstoffatmosphäre in einem Trockenschrank getrocknet und enthält 0,1 Gew.-% Restfeuchte (RF), 4 P-% n-Butylethylphosphinat und 1021 ppm Eisen.

Das n-Butylethylphosphinat ist als Aluminiumsalzmit dem Aluminium-Diethylphosphinsäuresalz und dem Eisen-Diethylphosphinsäuresalz cogefällt, d. h. mikroskopisch fein, nicht auftrennbar verbunden.

Die thermische Beständigkeit und das Verarbeitungsfenster (beide siehe Tabelle) sind reinem Aluminiumdiethylphosphinat (Vergleichsbeispiel 16) überlegen.

### Beispiel 13

1355 g Aluminiumsulfatlösung, der 3,9 g 22 %iger Eisen(III)sulfatlösung zugesetzt sind, werden mit 3800 g entionisiertem Wasser vorgelegt. Nach DE-A-10359815 werden 2652 g einer Natriumdiethylphosphinatlösung mit sec-Butylethylphosphinat und n-Butylethylphosphinat als Telomere und 7,71 Gew.-% P-Gehalt hergestellt und diese bei 100 °C zu der Vorlage zudosiert. Die Kristallsuspension wird heiß durch eine Saugnutsche filtriert und mit heißem Wasser gewaschen. Das filterfeuchte Produkt wird ca. 18 h bei 120 °C unter Stickstoffatmosphäre in einem Trockenschrank getrocknet und enthält 0,2 Gew.-% Restfeuchte (RF), 0,9 P-% sec-Butylethylphosphinat, 5 P-% n-Butylethylphosphinat und 1034 ppm Eisen.

Das sec-Butylethylphosphinat und das n-Butylethylphosphinat sind als Aluminiumsalze mit dem Aluminium-Diethylphosphinsäuresalz und dem Eisendiethylphosphinsäuresalz cogefällt, d. h. mikroskopisch fein, nicht auftrennbar verbunden.

Die thermische Beständigkeit und das Verarbeitungsfenster (beide siehe Tabelle) sind reinem Aluminiumdiethylphosphinat (Vergleichsbeispiel 16) überlegen.

### Beispiel 14

In 3800 g entionisiertem Wasser werden bei 100 °C 830,7 g Diethylphosphinsäuresalz-Aluminiumsalz und 22,3 g n-Butylethylphosphinsäure-Aluminiumsalz und 0,2 g 22 %ige Eisen(III)sulfatlösung vorgelegt. Dann werden 2,8 g einer Natriumdiethylphosphinatlösung mit 7,71 Gew.-% P-Gehalt, die in 3148 g Wasser gelöst sind, zudosiert.

Die Kristallsuspension wird wie in Beispiel 1 filtriert, gewaschen, getrocknet und enthält dann 0,1 Gew.-% Restfeuchte (RF), 1,8 P-% n-Butylethylphosphinat und 52 ppm Eisen.

Das Eisendiethylphosphinsäuresalz ist auf eine physikalische Mischung von Diethylphosphinsäure-Aluminiumsalz und n-Butylethylphosphinsäure-Aluminiumsalz cogefällt, d. h. mikroskopisch fein, nicht-auftrennbar verbunden. Die thermische Beständigkeit und das Verarbeitungsfenster (beide siehe Tabelle) sind reinem Aluminiumdiethylphosphinat (Vergleichsbeispiel 16) überlegen.

### Beispiel 15

In 3800 g entionisiertem Wasser werden bei 100 °C 811 g Diethylphosphinsäuresalz-Aluminiumsalz und 48,4 g n-Butylethylphosphinsäure-Aluminiumsalz und 3,9 g 22 %ige Eisen(III)sulfatlösung vorgelegt. Dann werden 54 g einer Natriumdiethyl-phosphinatlösung mit 7,71 Gew.-% P-Gehalt, die in 3097 g Wasser gelöst sind, zudosiert.

Die Kristallsuspension wird wie in Beispiel 1 filtriert, gewaschen, getrocknet und enthält dann 0,2 Gew.-% Restfeuchte (RF), 4 P-% n-Butylethylphosphinat und 1020 ppm Eisen.

Das Eisen-Diethylphosphinsäuresalz ist auf eine physikalische Mischung von Diethylphosphinsäure-Aluminiumsalz und n-Butylethylphosphinsäure-Aluminiumsalz cogefällt, d.h. mikroskopisch fein, nicht-auftrennbar verbunden. Die thermische Beständigkeit und das Verarbeitungsfenster (beide siehe Tabelle) sind reinem Aluminiumdiethylphosphinat (Vergleichsbeispiel 16) überlegen.

### Beispiel 16 (Vergleich)

Aluminiumdiethylphosphinat ohne einen Gehalt an Telomeren und/oder Eisen zeigt die in Tabelle 1 aufgeführte thermische Beständigkeit und Verarbeitungsfenster.

**Tabelle 1: Einsatzmengen bei den Kristallisationen [g]**

| Bsp | Einsatzmengen | | | | | Ausbeute | Produktanalyse | | | | Therm. Beständigkeit | Verarbeitungsfenster | BET-Oberfläche | Rüttel-/ Stampfdichte |
|---|---|---|---|---|---|---|---|---|---|---|---|---|---|---|
| | H2O | Diethylphosphinsäure, Natriumsalz, wässr. Lsg. 7,71 % P | Al-Sulfat Lsg. 4,35 % Al | Fe-Sulfat Lsg. 22 % Fe | Diethylphosphinsäure, Aluminumsalz | | Restfeuchte | Fe-Gehalt | sec-Butylethylphosphinat | n-Butylethylphosphinat | | | | |
| | [g] | | | | | | | | | | | | | |
| | | [g] | [g] | [g] | [g] | [g] | [%] | [ppm Fe] | [P-%] | [P-%] | [°C] | [%] | [m2/g] | [g/L] |
| 1 | 3800 | 2652 | 1364 | 0,07 | - | 835 | 0,2 | 18 | - | - | 344 | 4,4 | 1,8 | 600 |
| 2 | 3800 | 2652 | 1364 | 0,2 | - | 840 | 0,2 | 52 | - | - | 365 | 4,8 | 3,5 | 550 |
| 3 | 3800 | 2652 | 1355 | 3,9 | - | 845 | 0,2 | 1015 | - | - | 367 | 4,5 | 1,8 | 590 |
| 4 | 3800 | 2652 | 1238 | 52,0 | - | 835 | 0,1 | 13701 | - | - | 366 | 5,0 | 3,3 | 570 |
| 5 | 3800 | 2652 | 1364 | 0,07 | - | 845 | 0,1 | 18 | 0,2 | - | 350 | 5,0 | 2,0 | 610 |
| 6 | 3800 | 2652 | 1364 | 0,2 | - | 840 | 0,1 | 52 | - | 0,9 | 374 | 4,8 | 3 | 620 |
| 7 | 3800 | 2652 | 1355 | 3,9 | - | 842 | 0,2 | 1019 | - | 4 | 358 | 5,0 | 2,7 | 580 |
| 8 | 3800 | 2652 | 1238 | 52 | - | 830 | 0,2 | 13783 | - | 10 | 369 | 4,4 | 2,0 | 570 |
| 9 | 3800 | 2652 | 1364 | 0,2 | - | 840 | 0,1 | 52 | 0,1 | - | 355 | 4,8 | 2,4 | 590 |
| 10 | 3800 | 2652 | 1364 | 0,23 | - | 835 | 0,2 | 61 | - | 0,1 | 362 | 5,0 | 1,9 | 570 |
| 11 | 3800 | 2652 | 1364 | 0,2 | - | 835 | 0,1 | 53 | 0,4 | 0,9 | 355 | 4,6 | 2,7 | 600 |
| 12 | 3800 | 2652 | 1355 | 3,9 | - | 840 | 0,1 | 1021 | - | 4 | 360 | 4,8 | 3,1 | 570 |
| 13 | 3800 | 2652 | 1355 | 3,9 | - | 830 | 0,2 | 1034 | 0,9 | 5 | 360 | 4,6 | 3,0 | 600 |
| 16 Vgl | - | - | - | - | 1000 | | - | 0,2 | 0 | 0 | 325 | 8 | 2,2 | 610 |

Die erfindungsgemäßen Dialkylphosphinsäuresalze und Dialkylphosphinsäure-Telomer-Salze mit einem definierten Eisengehalt weisen ein sichtbar größeres (breiteres) Verarbeitungsfester als ein Diethylphosphinsäuresalz auf, das kein Eisen enthält.

Sie zeigen alle außerdem eine sehr gute Flammschutzwirkung in PA66 (UL94 Klassifizierung V-0).

In der vorgenannten Tabelle wurde die thermische Beständigkeit mit Hilfe der Thermogravimetrie (TGA) gemessen. Die angegebene Temperatur ist die, bei der 2 Gew.-% Gewichtsverlust vorliegen.

Das Verarbeitungsfenster der Polymerformmasse wurde ebenfalls mit der TGA bestimmt. Gemessen wird dabei der Gewichtsverlust in Gew.-% bei 330 °C nach 1 h. Die TGA wird unter Luft-Atmosphäre durchgeführt.

Bei der Polymerformmasse umfasst maximal die erfindungsgemäßen Flammschutzmittelzusammensetzung, Polyamid, MPP Melaminpolyphosphat), Glasfasern, Zinkborat und Wachs.

## Patentansprüche

1. Flammschutzmittelmischung, enthaltend als Komponente A) 60 bis 99,8999 Gew.-% Diorganylphosphinsäuresalze, 0,0001 bis 20 Gew.-% Komponente B1) ausgewählt aus der Gruppe bestehend aus Eisen(II)dialkylphosphinat, Eisen(III)dialkylphosphinat, Eisen(II)monoalkyl-phosphinat, Eisen(III)monoalkylphosphinat, Eisen(II)alkylphosphonat, Eisen(III)alkylphosphonat, Eisen(II)phosphit, Eisen(III)phosphit, Eisen(II)phosphat und Eisen(III)phosphat; und
0,1 bis 40 Gew.-% an Telomeren als weitere Komponente C), wobei es sich bei den Telomeren um Verbindungen der Formel (III) handelt
H-(C_{w}H_{2w})ₖ P(O)(OM) (CₓH₂ₓ)ₗ-H (III)
wobei in Formel (III), unabhängig voneinander,
| | | |
|---|---|---|
| k | 1 bis 9, l | 1 bis 9, |
| w | 2 bis 9, x | 2 bis 9, |
bedeuten und
M Mg, Ca, Al, Sb, Sn, Ge, Ti, Fe, Zr, Zn, Ce, Bi, Sr, Mn, Li, Na, K und/oder
eine protonierte Stickstoffbase bedeutet, und die Gruppen C_{w}H_{2w})ₖ, (CₓH₂ₓ)ₗ geradlinig oder verzweigt sein können; und/oder
wobei es sich bei den Telomeren um Verbindungen der Formel (I) handelt 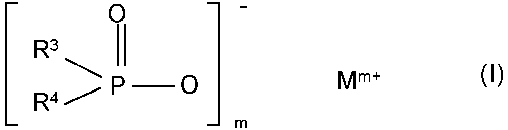
worin
R³, R⁴ gleich oder verschieden sind und C₆-C₁₀-Aryl, C₇-C₂₀-Alkylaryl, C₇-C₂₀-Arylalkyl und/oder C₃-C₁₆-Cycloalkyl oder -Bicycloalkyl,
M Mg, Ca, Al, Sb, Sn, Ge, Ti, Fe, Zr, Zn, Ce, Bi, Sr, Mn, Li, Na, K und/oder eine protonierte Stickstoffbase bedeutet;
und es sich bei den Komponenten A), B1) und C) um unterschiedliche Verbindungen handelt, wobei die Summe der Komponenten A), B1) und C) 100 Gew.-% ergibt
mit der Maßgabe, dass es sich bei den Komponenten A), B1) und C) jeweils um unterschiedliche Verbindungen handelt, dass Komponenten A), B1) und C) miteinander cogefällt sind oder dass Komponenten A) und C) in Form einer einheitlichen ionischen Verbindung vorliegen und Komponente B1) cogefällt wurde oder dass Komponenten A) und B1) miteinander cogefällt wurden und Komponente C) physikalisch zugemischt wurde.

2. Flammschutzmittelmischung nach Anspruch 1, **dadurch gekennzeichnet, dass** die Diorganylphosphinsäuresalze A) der Formel (II) entsprechen 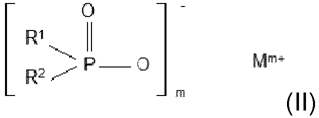 worin
R¹ und R² gleich oder verschieden sind und C₁-C₁₈-Alkyl linear, verzweigt oder cyclisch, C₆-C₁₈-Aryl, C₇-C₁₈-Arylalkyl und/oder C₇-C₁₈-Alkylaryl,
m 1 bis 4 und
M Mg, Ca, Al, Sb, Sn, Ge, Ti, Zr, Zn, Ce, Bi, Sr, Mn, Li, Na und/oder K
bedeuten.

3. Flammschutzmittelmischung nach Anspruch 2 , **dadurch kennzeichnet, dass** in Formel (II) R¹, R² gleich oder verschieden und, unabhängig voneinander, Methyl, Ethyl, n-Propyl, iso-Propyl, Butyl, n-Butyl, tert.-Butyl, n-Pentyl, 2-Pentyl, 3-Pentyl, 2-Methylbutyl, 3-Methylbutyl (iso-Pentyl), 3-Methylbut-2-yl, 2-Methylbut-2-yl, 2,2-Dimethylpropyl (Neopentyl), Hexyl, Heptyl, Octyl, Nonyl, Decyl, Cyclopentyl, Cyclopentylethyl, Cyclohexyl, Cyclohexylethyl, Phenyl, Phenylethyl, Methylphenyl und/oder Methylphenylethyl bedeuten.

4. Flammschutzmittelmischung nach einem oder mehreren der Ansprüche 1 bis 3, **dadurch kennzeichnet, dass** die Komponente B1) als Eisen(II)bis- und/oder Eisen(III)tris(diethylphosphinat), -(dipropylphosphinat), -(butylethyl-phosphinat), -(n-butylethylphosphinat, -(sec-butylethylphosphinat), -(hexylethylphosphinat), - (dibutylphosphinat), -(hexylbutylphosphinat), -(octylethylphosphinat), -(ethyl(cyclopentylethyl)phosphinat), -(butyl(cyclopentyl-ethyl)phosphinat), -(ethyl(cyclohexylethyl)phosphinat), -(butyl(cyclohexyl-ethyl)phosphinat, -(ethyl(phenylethyl)-phosphinat), -(butyl(phenylethyl)phosphinat), -(ethyl(4-methylphenylethyl)-phosphinat), -(butyl(4-methylphenylethyl)phosphinat), -(butylcyclopentyl-phosphinat), -(butylcyclohexylethylphosphinat), -(butylphenylphosphinat), -(ethyl(4-methylphenyl)phosphinat) und/oder -(butyl(4-methylphenyl)phosphinat; um Eisen(II)mono- und/oder Eisen(III)mono(ethylphosphinat), -(propylphosphinat), -(butylphosphinat, -n-butylphosphinat, -(sec-butylphosphinat), -/hexylphosphinat) und/oder -(octylphosphinat); um Eisen(II)- und/oder Eisen(III)-(ethylphosphonat), -(propylphosphonat), -(butylphosphonat, -(n-butylphosphonat, -(sec-butyl-phosphonat), -(hexylphosphonat) und/oder -(octylphosphonat) vorliegt.

5. Flammschutzmittelmischungen nach einem oder mehreren der Ansprüche 1 bis 4, **dadurch gekennzeichnet, dass** in Formel (III) w und x jeweils 2 oder 3 und k und l jeweils 1 bis 3 bedeuten und M Al, Ti, Fe oder Zn bedeutet.

6. Flammschutzmittelmischungen nach einem oder mehreren der Ansprüche 1 bis 5, **dadurch gekennzeichnet, dass** es sich bei den Telomeren um Metallsalze der Ethylbutylphosphinsäure, Dibutylphosphinsäure, Ethylhexylphosphinsäure, Butylhexylphosphinsäure, Ethyloctylphosphinsäure, sec-Butylethylphosphinsäure, 1-Ethylbutyl-Butyl-phosphinsäure, Ethyl-1-Methylpentyl-phosphinsäure, Di-sec-Butylphosphinsäure (Di-1-Methyl-propylphosphinsäure), Propyl-Hexylphosphinsäure, Dihexylphosphinsäure, Hexyl-Nonylphosphinsäure, Propyl-Nonylphosphinsäure, Dinonylphosphinsäure, Dipropylphosphinsäure, Butyl-Octylphosphinsäure, Hexyl-Octylphosphinsäure, Dioctylphosphinsäure, Ethyl(cyclopentylethyl)phosphinsäure, Butyl(cyclopentylethyl)phosphinsäure, Ethyl(cyclohexylethyl)phosphinsäure, Butyl(cyclohexylethyl)phosphinsäure, Ethyl(phenylethyl)phosphinsäure, Butyl(phenylethyl)phosphinsäure, Ethyl(4-methylphenylethyl)phosphinsäure, Butyl(4-methylphenylethyl)phosphinsäure, Butylcyclopentylphosphininsäure, Butylcyclohexylethylphosphinsäure, Butylphenylphosphinsäure, Ethyl(4-methylphenyl)phosphinsäure und/oder Butyl(4-methylphenyl)phosphinsäure handelt, wobei das Metall des Metallsalzes aus der Gruppe Mg, Ca, Al, Sb, Sn, Ge, Ti, Fe, Zr, Zn, Ce, Bi, Sr, Mn, Li, Na und/oder K entstammt.

7. Flammschutzmittelmischungen nach einem oder mehreren der Ansprüche 1 bis 6, **dadurch gekennzeichnet, dass** sie weiterhin als Komponente D) Synergisten enthalten, wobei es sich bei den Synergisten um Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat , Melaminpolyphosphate, Melampolyphosphate, Melempolyphosphate und/oder Melonpolyphosphate; um Melaminkondensationsprodukte wie Melam, Melem und/oder Melon; um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Harnstoffcyanurat, Dicyandiamid und/oder Guanidin; um stickstoffhaltige Phosphate der Formeln (NH₄)_{y}H_{3-y}PO₄ bzw. (NH₄PO₃)_{z}, mit y gleich 1 bis 3 und z gleich 1 bis 10.000; um Aluminiumphosphite, Aluminiumpyrophosphite, Aluminiumphosphonate, Aluminiumpyrophosphonate ; um Silicate, Zeolite, Kieselsäuren, Keramikpulver, Zinkverbindungen, z. B. Zinkborat, Zinkcarbonat, Zinkstannat, Zinkhydroxystannat, Zinkphosphat, Zinksulfid, Zinkoxid, Zinkhydroxid, Zinnoxidhydrat, basisches Zink-Silikat, Zinkmolybdat Magnesiumhydroxid, Hydrotalcit, Magnesiumcarbonat und/oder Calciummagnesiumcarbonat handelt.

8. Flammschutzmittelmischungen nach einem oder mehreren der Ansprüche 1 bis 7, **dadurch gekennzeichnet, dass** sie
eine Teilchengröße von 0,01 bis 1000 µm,
eine Schüttdichte von 50 bis 1500 g/l,
eine Stampfdichte von 100 g/l bis 1100 g/l,
einen Schüttwinkel von 5 bis 45 Grad,
eine BET-Oberfläche von 1 bis 40 m²/g,
L-Farbwerte von 85 bis 99,9,
a-Farbwerte von -4 bis +9,
b-Farbwerte von -2 bis +6,
aufweisen.

9. Flammschutzmittelmischungen nach einem oder mehreren der Ansprüche 1 bis 8, **dadurch gekennzeichnet, dass** sie
eine Teilchengröße von 0,5 bis 800 µm,
eine Schüttdichte von 80 bis 800 g/l,
eine Stampfdichte von 600 g/L bis 800 g/l,
einen Schüttwinkel von 10 bis 40 Grad aufweisen.

10. Verwendung von Flammschutzmittelmischungen nach einem oder mehreren der Ansprüche 1 bis 9 zur Herstellung von flammgeschützten Polymerformmassen und zur Herstellung von flammgeschützten Polymerformkörpern.

11. Flammgeschützte thermoplastische oder duroplastische Polymerformmasse, Polymer-Formkörper, -Filme, -Fäden und Fasern enthaltend 0,5 bis 50 Gew.-% Flammschutzmittelmischungen nach einem oder mehreren der Ansprüche 1 bis 9, 0,5 bis 95 Gew.-% thermoplastisches oder duroplastisches Polymer oder Mischungen derselben, 0 bis 55 Gew.-% Additive und 0 bis 70 Gew.-% Füllstoff bzw. Verstärkungsmaterialien, wobei die Summe der Komponenten 100 Gew.-% beträgt und wobei es sich bei dem Polymer um thermoplastische Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe und/oder um duroplastische Polymere der Art Formaldehyd-, Epoxid-, Melamin-Phenolharz-Polymere, ungesättigte Polyester, Epoxidharze und/oder Polyurethane.

12. Thermoplastische oder duroplastische Polymerformmasse, Formkörper, Filme, Fäden und Fasern nach Anspruch 11, **dadurch gekennzeichnet, dass** sie weitere Additive enthalten, wobei es sich dabei um Antioxidantien, UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren, Farbstoffe, Pigmente und andere handelt.

## Claims

1. Flame retardant mixture containing, as
component A) 60 to 99.8999 wt% diorganylphosphinic acid salts, 0.0001 to 20% by weight of component B1) selected from the group consisting of iron(II) dialkyl phosphinate, iron(III) dialkyl phosphinate, iron(II) monoalkyl phosphinate, iron(III) monoalkyl phosphinate, iron(II) alkyl phosphonate, iron(III)alkylphosphonate, iron(II)phosphite, iron(III)phosphite, iron(II)phosphate and iron(III)phosphate; and
0.1 to 40 wt% of telomers as a further component C), wherein the telomers are compounds of formula (III)
H-(C_{w}H_{2w})ₖP(O)(OM)(CₓH₂ₓ)ₗ-H (III)
wherein, in formula (III), independently of one another,
| | | |
|---|---|---|
| k | 1 to 9, I | 1 to 9, |
| w | 2 to 9, x | 2 to 9, |
mean and
M Mg, Ca, Al, Sb, Sn, Ge, Ti, Fe, Zr, Zn, Ce, Bi, Sr, Mn, Li, Na, K and/or a protonated nitrogen base, and the groups C_{w}H_{2wk}, (CₓH₂ₓ)ₗ may be straight or branched; and/or
wherein the telomers are compounds of formula (I) 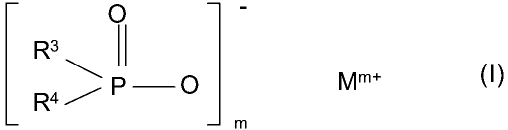
wherein
R³, R⁴ are identical or different and C₆ -C₁₀ -aryl, C₇ -C₂₀ -alkylaryl, C₇ -C₂₀ - arylalkyl and/or C₃ -C₁₆ -cycloalkyl or -bicycloalkyl,
M Mg, Ca, Al, Sb, Sn, Ge, Ti, Fe, Zr, Zn, Ce, Bi, Sr, Mn, Li, Na, K and/or a protonated nitrogen base;
and components A), B1) and C) are different compounds, wherein the sum of components A), B1) and C) is 100% by weight
with the proviso that components A), B1) and C) are each different compounds, that components A), B1) and C) are co-precipitated with each other, or that components A) and C) are present in the form of a uniform ionic compound and component B1) has been co-precipitated, or that components A) and B1) have been co-precipitated with each other and component C) has been physically mixed in.

2. Flame retardant mixture according to claim 1, **characterised in that** the diorganylphosphinic acid salts A) correspond to formula (II) 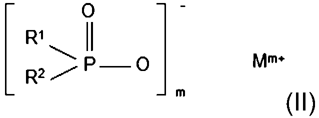 where
R¹ and R² are identical or different and C₁ -C₁₈ -alkyl is linear, branched or cyclic, C₆ -C₁₈ -aryl, C₇ -C₁₈ -arylalkyl and/or C₇ -C₁₈ -alkylaryl,
m 1 to 4 and
M Mg, Ca, Al, Sb, Sn, Ge, Ti, Zr, Zn, Ce, Bi, Sr, Mn, Li, Na and/or K

3. Flame retardant mixture according to claim 2 , **characterised in that** in formula (II) R¹ , R² are identical or different and, independently of one another, represent methyl, ethyl, n-propyl, iso-propyl, butyl, n-butyl, tert.-butyl, n-pentyl, 2-pentyl, 3-pentyl, 2-methylbutyl, 3-methylbutyl (iso-pentyl), 3-methylbut-2-yl, 2-methylbut-2-yl, 2,2-dimethylpropyl (neopentyl), hexyl, heptyl, octyl, nonyl, decyl, cyclopentyl, cyclopentylethyl, cyclohexyl, cyclohexylethyl, phenyl, phenylethyl, methylphenyl and/or methylphenylethyl.

4. Flame retardant mixture according to one or more of claims 1 to 3, **characterised in that** component B1) is iron(II)bis- and/or iron(III)tris(diethylphosphinate), -(dipropylphosphinate), -(butylethylphosphinate), - (n-butylethyl phosphinate, -(sec-butylethyl phosphinate), -(hexylethyl phosphinate), -(dibutyl phosphinate), -(hexylbutyl phosphinate), -(octylethyl phosphinate), - (ethyl(cyclopentylethyl) phosphinate), -(butyl(cyclopentyl-ethyl)phosphinate), - (ethyl(cyclohexyl-ethyl)phosphinate), -(butyl(cyclohexyl-ethyl)phosphinate, - (ethyl(phenylethyl)-phosphinate), -(butyl(phenylethyl)phosphinate), -(ethyl(4-methylphenylethyl) phosphinate), -(butyl(4-methylphenylethyl) phosphinate), - (butylcyclopentyl phosphinate), -(butylcyclohexylethyl phosphinate), -(butylphenyl phosphinate), -(ethyl(4-methylphenyl)phosphinate) and/or -(butyl(4-methylphenyl)phosphinate;
iron(II) mono- and/or iron(III) mono(ethylphosphinate), -(propylphosphinate), -(butyl phosphinate, -n-butyl phosphinate, -(sec-butyl phosphinate), -/hexyl phosphinate) and/or -(octyl phosphinate); to iron(II) and/or iron(III) ethyl phosphonate,
-(propylphosphonate), -(butylphosphonate, -(n-butylphosphonate, -(sec-butylphosphonate), -(hexylphosphonate) and/or -(octylphosphonate).

5. Flame retardant mixtures according to one or more claims 1 to 4, **characterised in** formula (III) w and x each represent 2 or 3 and k and I each represent 1 to 3 and M represents Al, Ti, Fe or Zn.

6. Flame retardant mixtures according to one or more of claims 1 to 5, **characterised in that** the telomers are metal salts of ethylbutylphosphinic acid, dibutylphosphinic acid, ethylhexylphosphinic acid, butylhexylphosphinic acid, ethylhexylphosphinic acid, sec-butylethylphosphinic acid, 1-ethylbutyl-butylphosphinic acid, ethyl-1-methylpentylphosphinic acid, di-sec-butylphosphinic acid (di-1-methylpropylphosphinic acid), propylhexylphosphinic acid, dihexylphosphinic acid, hexylnonylphosphinic acid, propylnonylphosphinic acid, dinonylphosphinic acid, dipropylphosphinic acid, butyl octylphosphinic acid, hexyl octylphosphinic acid, dioctylphosphinic acid, ethyl (cyclopentylethyl) phosphinic acid, butyl (cyclopentylethyl) phosphinic acid, ethyl (cyclohexylethyl) phosphinic acid, butyl (cyclohexylethyl) phosphinic acid, ethyl(phenylethyl)phosphinic acid, butyl(phenylethyl)phosphinic acid, ethyl(4-methylphenylethyl)phosphinic acid, butyl(4-methylphenylethyl)phosphinic acid, butylcyclopentylphosphinic acid, butylcyclohexylethylphosphinic acid, butylphenylphosphinic acid, ethyl(4-methylphenyl)phosphinic acid and/or butyl(4-methylphenyl)phosphinic acid, wherein the metal of the metal salt is selected from the group consisting of Mg, Ca, Al, Sb, Sn, Ge, Ti, Fe, Zr, Zn, Ce, Bi, Sr, Mn, Li, Na and/or K.

7. Flame retardant mixtures according to one or more of claims 1 to 6, **characterised in that** they further contain synergists as component D), wherein the synergists are melamine phosphate, dimelamine phosphate, pentamelamine triphosphate, trimelamine diphosphate, tetrakismelamine triphosphate, hexakismelamine pentaphosphate, melamine diphosphate, melamine tetraphosphate, melamine pyrophosphate , melamine polyphosphates, melampolyphosphates, melempolyphosphates and/or melonpolyphosphates; melamine condensation products such as melam, melem and/or melon; oligomeric esters of tris(hydroxyethyl)isocyanurate with aromatic polycarboxylic acids, benzoguanamine, tris(hydroxyethyl)isocyanurate, allantoin, glycouril, melamine, melamine cyanurate, urea cyanurate, dicyandiamide and/or guanidine; nitrogencontaining phosphates of the formulae (NH(_{4) )}(_{y) H}(_{3-y)} PO(₄₎ or (NH₄ PO₃ )_{z} , with y equal to 1 to 3 and z equal to 1 to 10,000; aluminium phosphites, aluminium pyrophosphites, aluminium phosphonates, aluminium pyrophosphonates ; silicates, zeolites, silicic acids, ceramic powders, zinc compounds, e.g. zinc borate, zinc carbonate, zinc stannate, zinc hydroxystannate, zinc phosphate, zinc sulphide, zinc oxide, zinc hydroxide, zinc oxide hydrate, basic zinc silicate, zinc molybdate magnesium hydroxide, hydrotalcite, magnesium carbonate and/or calcium magnesium carbonate.

8. Flame retardant mixtures according to one or more of claims 1 to 7,
**characterised in that** they
a particle size of 0.01 to 1000 µm,
a bulk density of 50 to 1500 g/l,
a tamped density of 100 g/l to 1100 g/l,
a bulk angle of 5 to 45 degrees,
a BET surface area of 1 to 40 m²/g,
L colour values of 85 to 99.9,
a-colour values from -4 to +9,
b colour values of -2 to +6,

9. Flame retardant mixtures according to one or more of claims 1 to 8,
**characterised in that** they
a particle size of 0.5 to 800 µm,
a bulk density of 80 to 800 g/l,
a tamping density of 600 g/L to 800 g/L,
a bulk angle of 10 to 40 degrees.

10. Use of flame retardant mixtures according to one or more of claims 1 to 9 for the production of flame-retardant polymer moulding compounds and for the production of flame-retardant polymer moulded articles.

11. Flame-retardant thermoplastic or thermosetting polymer moulding compounds, polymer moulded articles, films, threads and fibres containing 0.5 to 50 wt.% flame retardant mixtures according to one or more of claims 1 to 9, 0.5 to 95 wt.% thermoplastic or thermosetting polymer or mixtures thereof, 0 to 55 wt.% additives and 0 to 70 wt.% filler or reinforcing materials, the sum of the components being 100 wt.%, and the polymer being thermoplastic polymers of the type polystyrene HI (high impact), polyphenylene ether, polyamide, polyester, polycarbonate and blends or polymer blends of the ABS (acrylonitrile-butadienestyrene) or PC/ABS (polycarbonate/acrylonitrile butadiene styrene) or PPE/HIPS (polyphenylene ether/polystyrene HI) plastics and/or thermosetting polymers of the type formaldehyde, epoxy, melamine-phenolic resin polymers, unsaturated polyesters, epoxy resins and/or polyurethanes.

12. Thermoplastic or thermosetting polymer moulding compounds, moulded articles, films, threads and fibres according to claim 11, **characterised in that** they contain further additives, which are antioxidants, UV stabilisers, gamma ray stabilisers, hydrolysis stabilisers, antistatic agents, emulsifiers, nucleating agents, plasticisers, processing aids, impact modifiers, dyes, pigments and others.

## Revendications

1. Composition ignifuge comprenant, en tant que
composant A) 60 à 99,8999 % en poids de sels d'acide diorganylphosphinique, 0,0001 à 20 % en poids de composant B1) choisi dans le groupe constitué par le dialkylphosphinate de fer (II), le dialkylphosphinate de fer (III), le monoalkylphosphinate de fer (II), le monoalkylphosphinate de fer (III), l'alkylphosphonate de fer (II), l' alkylphosphonate de fer (III), phosphite de fer (II), phosphite de fer (III), phosphate de fer (II) et phosphate de fer (III) ; et
0,1 à 40 % en poids de télomères comme autre composant C), les télomères étant des composés de formule (III)
H-(C_{w}H_{2w})ₖP(O)(OM)(CₓH₂ₓ)ₗ-H (III)
dans la formule (III), indépendamment les uns des autres,
| | | |
|---|---|---|
| k | 1 à 9, l | 1 à 9, |
| w | 2 à 9, x | 2 à 9, |
signifient et
M Mg, Ca, Al, Sb, Sn, Ge, Ti, Fe, Zr, Zn, Ce, Bi, Sr, Mn, Li, Na, K et/ou une base azotée protonée, et les groupes C_{w} H_{2w} )ₖ , (Cₓ H₂ₓ )ₗ peuvent être linéaires ou ramifiés ; et/ou
les télomères étant des composés de formule (I) 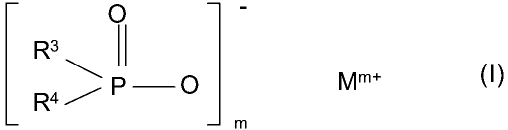
dans laquelle
R³ , R⁴ sont identiques ou différents et C₆ -C₁₀ -aryle, C₇ -C₂₀ -alkylaryle, C₇ -C₂₀ - arylalkyle et/ou C₃ -C₁₆ -cycloalkyle ou -bicycloalkyle,
M représente Mg, Ca, AI, Sb, Sn, Ge, Ti, Fe, Zr, Zn, Ce, Bi, Sr, Mn, Li, Na, K et/ou une base azotée protonée ;
et les composants A), B1) et C) sont des composés différents, la somme des composants A), B1) et C) étant égale à 100 % en poids
à condition que les composants A), B1) et C) soient chacun des composés différents, que les composants A), B1) et C) soient coprécipités ensemble ou que les composants A) et C) se présentent sous la forme d'un composé ionique uniforme et que le composant B1) ait été coprécipité ou que les composants A) et B1) aient été coprécipités ensemble et que le composant C) ait été mélangé physiquement.

2. Mélange de retardateurs de flamme selon la revendication 1, **caractérisé en ce que** les sels d'acide diorganylphosphinique A) correspondent à la formule (II) 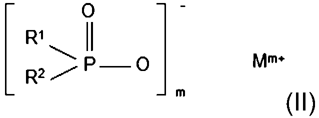 dans laquelle
R¹ et R² sont identiques ou différents et C₁ -C₁₈ -alkyle linéaire, ramifié ou cyclique, C₆ -C₁₈ -aryle, C₇ -C₁₈ -arylalkyle et/ou C₇ -C₁₈ -alkylaryle,
m 1 à 4 et
M Mg, Ca, AI, Sb, Sn, Ge, Ti, Zr, Zn, Ce, Bi, Sr, Mn, Li, Na et/ou K

3. Mélange ignifuge selon la revendication 2 , **caractérisé en ce que** dans la formule (II), R¹ et R² sont identiques ou différents et, indépendamment l'un de l'autre, représentent un groupe méthyle, éthyle, n-propyle, isopropyle, butyle, n-butyle, tert.butyle, n-pentyle, 2-pentyle, 3-pentyle, 2-méthylbutyle, 3-méthylbutyle (isopentyle), 3-méthylbut-2-yle, 2-méthylbut-2-yle, 2,2-diméthylpropyle (néopentyle), hexyl, heptyl, octyl, nonyl, decyl, cyclopentyl, cyclopentylethyl, cyclohexyl, cyclohexylethyl, phenyl, phenylethyl, methylphenyl et/ou methylphenylethyl.

4. Mélange ignifuge selon une ou plusieurs des revendications 1 à 3, **caractérisé en ce que** le composant B1) est sous forme de bis(diéthylphosphinate) et/ou tris(diéthylphosphinate) de fer (II), -(dipropylphosphinate), - (butyléthylphosphinate), -(n-butyléthylphosphinate, -(sec-butyléthylphosphinate), - (hexylethylphosphinate), -(dibutylphosphinate), -(hexylbutylphosphinate), - (octylethylphosphinate), -(éthyl(cyclopentylethyl)phosphinate), - (butyl(cyclopentylethyl)phosphinate), -(éthyl(cyclohexylethyl)phosphinate), - (butyl(cyclohexylethyl)phosphinate, -(éthyl(phénylethyl)phosphinate), - (butyl(phénylethyl)phosphinate), -(éthyl(4-méthylphényléthyl)phosphinate), - (butyl(4-méthylphényléthyl)phosphinate), -(butylcyclopentylphosphinate), - (butylcyclohexylethylphosphinate), -(butylphénylphosphinate), -(éthyl(4-méthylphényl)phosphinate) et/ou -(butyl(4-méthylphényl)phosphinate ; pour le mono(éthylphosphinate) de fer (II) et/ou le mono(éthylphosphinate) de fer (III), le (propylphosphinate) de fer (II) et/ou le (propylphosphinate) de fer (III), le (butylphosphinate) de fer (II), le (butylphosphinate) de fer (III), le (n-butylphosphinate) de fer (III), le (sec-butyl
-(butylphosphinate, -n-butylphosphinate, -(sec-butylphosphinate), - /hexylphosphinate) et/ou -(octylphosphinate) ; pour le fer (II) et/ou le fer (III) - (éthylphosphonate),
-(propylphosphonate), -(butylphosphonate, -(n-butylphosphonate, -(sec-butylphosphonate), -(hexylphosphonate) et/ou -(octylphosphonate).

5. Mélanges de retardateurs de flamme selon une ou plusieurs des revendications 1 à 4, **caractérisés en ce que**, dans la formule (III), w et x représentent chacun 2 ou 3 et k et l représentent chacun 1 à 3, et M représente AI, Ti, Fe ou Zn.

6. Mélanges ignifuges selon une ou plusieurs des revendications 1 à 5, **caractérisés en ce que** les télomères sont des sels métalliques de l'acide éthylbutylphosphinique, de l'acide dibutylphosphinique, de l'acide éthylhexylphosphinique, de l' acide butylhexylphosphinique, acide éthyloctylphosphinique, acide sec-butyléthylphosphinique, acide 1-éthylbutylbutylphosphinique, acide éthyl-1-méthylpentylphosphinique, acide di-sec-butylphosphinique (acide di-1-méthylpropylphosphinique), acide propylhexylphosphinique, acide dihexylphosphinique, acide hexylnonylphosphinique, acide propylnonylphosphinique, acide dinonylphosphinique, acide dipropylphosphinique, acide butyl-octylphosphinique, acide hexyl-octylphosphinique, acide dioctylphosphinique, acide éthyl(cyclopentylethyl)phosphinique, acide butyl(cyclopentylethyl)phosphinique, acide éthyl(cyclohexylethyl)phosphinique, acide butyl(cyclohexylethyl)phosphinique, acide éthyl(phényléthyl)phosphinique, acide butyl(phényléthyl)phosphinique, acide éthyl(4-méthylphényléthyl)phosphinique, acide butyl(4-méthylphényléthyl)phosphinique, acide butylcyclopentylphosphinique, acide butylcyclohexylethylphosphinique, acide butylphénylphosphinique, acide éthyl(4-méthylphényl)phosphinique et/ou acide butyl(4-méthylphényl)phosphinique, le métal du sel métallique provenant du groupe Mg, Ca, Al, Sb, Sn, Ge, Ti, Fe, Zr, Zn, Ce, Bi, Sr, Mn, Li, Na et/ou K.

7. Mélanges ignifuges selon une ou plusieurs des revendications 1 à 6, **caractérisés en ce qu'**ils contiennent en outre comme composant D) des synergistes, les synergistes étant le phosphate de mélamine, le phosphate de dimélamine, le triphosphate de pentamélamine, le diphosphate de trimélamine, le tétrakismélamine triphosphate, hexakismélamine pentaphosphate, mélamine diphosphate, mélamine tétraphosphate, mélamine pyrophosphate , mélamine polyphosphates, mélamine polyphosphates, mélamine polyphosphates et/ou mélamine polyphosphates ; des produits de condensation de mélamine tels que le mélam, mélém et/ou mélon ; pour des esters oligomères du tris(hydroxyéthyl)isocyanurate avec des acides polycarboxyliques aromatiques, la benzoguanamine, le tris(hydroxyéthyl)isocyanurate, l'allantoïne, le glycouril, la mélamine, le cyanurate de mélamine, le cyanurate d'urée, le dicyandiamide et/ou la guanidine ; pour désigner des phosphates azotés de formules (NH(_{4) )}(_{y) H}(_{3-y)} PO(₄₎ ou (NH₄ PO₃ )_{z} , avec y égal à 1 à 3 et z égal à 1 à 10 000 ; pour obtenir des phosphites d'aluminium, des pyrophosphites d'aluminium, des phosphonates d'aluminium, des pyrophosphonates d'aluminium ; pour obtenir des silicates, des zéolithes, des acides siliciques, des poudres céramiques, des composés de zinc, par exemple du borate de zinc, du carbonate de zinc, du stannate de zinc, hydroxystannate de zinc, phosphate de zinc, sulfure de zinc, oxyde de zinc, hydroxyde de zinc, oxyde d'étain hydraté, silicate de zinc basique, molybdate de zinc, hydroxyde de magnésium, hydrotalcite, carbonate de magnésium et/ou carbonate de calcium et de magnésium.

8. Mélanges ignifuges selon une ou plusieurs des revendications 1 à 7,
**caractérisés en ce qu'**ils
une taille de particules comprise entre 0,01 et 1000 µm,
une densité apparente de 50 à 1500 g/l,
une densité tassée de 100 g/l à 1100 g/l,
un angle de talus de 5 à 45 degrés,
une surface BET de 1 à 40 m² /g,
des valeurs de couleur L comprises entre 85 et 99,9,
des valeurs de couleur a comprises entre -4 et +9,
des valeurs de couleur b comprises entre -2 et +6,

9. Mélanges ignifuges selon une ou plusieurs des revendications 1 à 8,
**caractérisés en ce qu'**ils
une taille de particules comprise entre 0,5 et 800 µm,
une densité apparente de 80 à 800 g/l,
une densité tassée comprise entre 600 g/l et 800 g/l,
un angle de talus de 10 à 40 degrés.

10. Utilisation de mélanges de retardateurs de flamme selon une ou plusieurs des revendications 1 à 9 pour la fabrication de masses moulées polymères ignifugées et pour la fabrication de corps moulés polymères ignifugés.

11. Composition de moulage polymère thermoplastique ou thermodurcissable ignifugée, articles moulés, films, fils et fibres polymères contenant 0,5 à 50 % en poids de mélanges ignifuges selon une ou plusieurs des revendications 1 à 9, 0,5 à 95 % en poids% de polymère thermoplastique ou thermodurcissable ou de mélanges de ceux-ci, 0 à 55 % en poids d'additifs et 0 à 70 % en poids de charge ou de matériaux de renforcement, la somme des composants s'élevant à 100 % en poids et le polymère étant des polymères thermoplastiques du type polystyrène HI (High-Impact), polyphénylène éther, polyamide, polyester, polycarbonate et mélanges ou mélanges de polymères de type ABS (acrylonitrile-butadiène-styrène) ou PC/ABS (polycarbonate/acrylonitrile-butadiène-styrène) ou PPE/HIPS (polyphénylène éther/polystyrène HI) et/ou des polymères thermodurcissables du type polymères de formaldéhyde, époxy, résine mélamine-phénolique, polyesters insaturés, résines époxy et/ou polyuréthanes.

12. Masse à mouler polymère thermoplastique ou thermodurcissable, corps moulés, films, fils et fibres selon la revendication 11, **caractérisés en ce qu'**ils contiennent d'autres additifs, à savoir des antioxydants, des stabilisateurs UV, des stabilisateurs aux rayons gamma, des stabilisateurs d'hydrolyse, des agents antistatiques, des émulsifiants, des agents de nucléation, des plastifiants, des adjuvants de mise en œuvre, des modificateurs de résistance aux chocs, des colorants, des pigments et autres.
